# EUROPÄISCHE PATENTSCHRIFT

(11) **EP 4 078 301 B1**
(45) Veröffentlichungstag und Bekanntmachung des Hinweises auf die Patenterteilung: **04.02.2026**
(21) Anmeldenummer: 20817285.8
(22) Anmeldetag: 01.12.2020
(51) Int. Cl.: G06F 1/3209, G05B 19/042, G06F 1/3234

(54) **SERIELLE SCHNITTSTELLE**
SERIAL PORT
PORT SERIE

(30) Priorität: 18.12.2019 DE 102019134907
(43) Veröffentlichungstag der Anmeldung: 26.10.2022
(73) Patentinhaber: Endress+Hauser Flowtec AG, 4153 Reinach (CH)
(72) Erfinder: VOGLGSANG, Dominik, 79589 Binzen (DE); SCHAUBHUT, André, 79650 Schopfheim (DE); KNAPP, Christian, 79774 Albbruck (DE); KÜNG, Thomas, 4142 Münchenstein (CH)
(74) Vertreter: Endress + Hauser Group Services (Deutschland) AG+Co. KG
(86) Internationale Anmeldenummer: PCT/EP2020/084081
(87) Internationale Veröffentlichungsnummer: WO 2021/121959

(56) Entgegenhaltungen:
- CN-U- 207 457 752
- CN-U- 209 514 359
- US-A1- 2008 015 799
- US-A1- 2010 026 518
- US-A1- 2011 208 440
- US-A1- 2015 341 179
- ONE ET AL: "AN-960 APPLICATION NOTE RS-485/RS-422 Circuit Implementation Guide INTRODUCTION", 1 January 2008 (2008-01-01), pages 781 - 329, XP055214100, Retrieved from the Internet <URL:http://www.analog.com/media/en/technical-documentation/application-notes/AN-960.pdf> [retrieved on 20150917]
- ANALOG DEVICES: "High Speed, Isolated RS-485 Transceiver with Integrated Transformer Driver ADM2485", 20 May 2008 (2008-05-20), XP055771547, Retrieved from the Internet <URL:https://www.analog.com/media/en/technical-documentation/data-sheets/ADM2485.pdf> [retrieved on 20210202]

## Beschreibung

Die Erfindung betrifft eine Elektronik mit einem Mikrocontroller und einer damit elektrisch verbundenen Schnittstellenschaltung.

In der US-A 2008/015799, der US-A 2010/0026518 der "AN-960 APPLICATION NOTE RS-485/ RS-422 Circuit Implementation Guide INTRODUCTION", der "High Speed, Isolated RS-485 Transceiver with Integrated Transformer Driver ADM2485" oder der US-A 2011/0208440 ist jeweils eine Elektronik, insb. für ein oder mehrere Meßgeräte, bzw. ein Meßsystem mit einer solchen Elektronik und einem oder mehreren daran angeschlossenen Sensoren gezeigt.

Die - hier als ein an einen entfernten Signalempfänger Meßdaten sendender Signalgeber eines Meßsystems der industriellen Meß- und Automatisierungstechnik ausgebildete - Elektronik umfaßt einen Mikroprozessor bzw. einen damit gebildeten Mikrocontroller sowie eine damit elektrisch verbundene Schnittstellenschaltung, nämlich eine einer, ggf. auch nicht proprietären bzw. standardisierten Kommunikation mit einem externen Signalempfänger und/oder -geber dienliche elektronische Schaltung. Zum Bereitstellen von im Betrieb benötigter elektrischer Leistung, ggf. auch mit verschiedenen Betriebsspannungen, weist die die Elektronik zudem eine entsprechende Versorgungsschaltung auf. Die Versorgungsschaltung bzw. die damit gebildete Versorgungsschaltung kann beispielsweise netz- und/oder batteriegespeist sein. Die Elektronik kann dementsprechend an eine - selbst ebenfalls netz- und/oder batteriegespeiste - externe Energieversorgung elektrisch angeschlossen sein, beispielsweise mittels einer 2-Draht-Leitung unter Bildung einer 4-20 mA-Stromschleife bzw. eines seriellen Feldbusses, und/oder die Elektronik kann mit einem internen, ggf. auch wiederaufladbaren elektrochemischen Energiespeicher ausgerüstet sein.

Die Schnittstellenschaltung der vorbezeichneten Elektroniken weist jeweils einen dem Verbinden mit einer externen Leitung dienlichen Anschlußterminal sowie einen mit einem Signalausgang des Mikrocontrollers elektrisch verbunden Signaleingang auf und ist dafür eingerichtet, im Betrieb der Elektronik ein am Signaleingang anliegendes Digitalsignal in ein, beispielsweise dem EIA-485-Standard (RS-485) konformes, Digitalsignal am Anschlußterminal zu konvertieren. Darüberhinaus ist die in der US-A 2008/015799 gezeigte Elektronik u.a. auch dafür eingerichtet, ein von einem externen Signalgeber ausgegebenes und am Anschlußterminal der Schnittstellenschaltung eingehendes Digitalsignal zu empfangen und zu verarbeiten, nämlich eine oder mehrerer darin enthaltene Anweisungen im Mikrocontroller auszuführen. Bei der in der US-A 2008/015799 gezeigten Elektronik erfolgt die Signalübertragung zwischen Schnittstellenschaltung und Mikrocontroller galvanisch getrennt, beispielsweise mittels Optokoppler.

Um ein Senden und eine Empfangen von Digitalsignalen an eine und demselben Anschlußterminal zu ermöglichen kann die Schnittstellenschaltung ferner eingerichtet sein, im sogenannten Wechselbetrieb (Halbduplex) zu operieren, derart, daß die Schnittstellenschaltung in einem Empfangsbereitschaft herstellenden und zudem Anweisungen des Signalgebers an den Mikrocontroller weiterleitenden Betriebsmodus ein am Anschlußterminal anliegendes digitales Eingangssignal empfängt und in ein dieses repräsentierendes binäres Ausgangssignal wandelt sowie nämliches Ausgangssignal an den Mikrocontroller ausgibt, und daß die Schnittstellenschaltung in einem Sendebereitschaft herstellenden anderen Betriebsmodus ein vom Mikrocontroller ausgegebenes digitales Ausgangssignal empfängt und in ein dieses repräsentierendes binäres Ausgangssignal der Elektronik wandelt sowie nämliches Ausgangssignal an den Anschlußterminal bzw. eine daran angeschlossene Signalleitung ausgibt. Bei Verwendung der vorbezeichneten 2-Draht-Leitung auch zum Senden und Empfangen von Daten kann die Steuerung der Datenübertragung azyklisch mittels eines

Datenflußsteuerungsverfahren (Handshake) erfolgen, beispielsweise derart, daß die Schnittstellenschaltung, sofern keine von einem an die vorbezeichnete 2-Draht-Leitung angeschlossenen übergeordneten Datenverarbeitungseinheit an die Elektronik gerichtete Anfrage zu beantworten ist, entsprechend in dem vorbezeichneten, die Empfangsbereitschaft herstellenden Betriebsmodus operieren gelassen wird.

Im Ergebnis ist die Schnittstellenschaltung für eine sichere und fehlerfreie Datenübertragung ständig in Betrieb zu halten; dies im besonderen auch dann, wenn keinerlei Daten zwischen der übergeordneten Datenverarbeitungseinheit und der Elektronik zu übertragen sind. Dies stellt nicht zuletzt für den vorbezeichneten Fall, daß die Versorgung der Elektronik mit elektrischer Energie lediglich mittels internen Energiespeicher und/oder via 2-Draht-Leitung, mithin mit niedriger Leistung im Bereich von weniger als 100 mW (≤ 4 mA · 25 V) erfolgt, einen besonderen, die Umsetzung erheblich limitierenden, ggf. auch verhindernden Nachteil dar; dies umso mehr, für den vorbezeichneten Fall, daß die Signalübertragung über in der Schnittstellenschaltung vorgesehene galvanische Trennstellen, mithin mit nominell noch weiter erhöhtem Leistungsbedarf erfolgen soll.

Ausgehend vom vorbezeichneten Stand der Technik besteht eine Aufgabe der Erfindung darin, Elektroniken der in Rede stehenden Art dahingehend zu verbessern, daß deren jeweilige Schnittestelle bei im Empfangsbereitschaft herstellenden Betriebsmodus eine niedrige nominelle Leistung aufweist; dies im besonderen in der Weise, daß die nominelle Leistung der Schnittestelle ausreichend niedrig ist, um die Verwendung in einer zumindest zeitweise mit elektrischer Leistung von weniger als 100 mW gespeisten Elektronik zu ermöglichen.

Zur Lösung der Aufgabe besteht die Erfindung in einer, beispielsweise als Kommunikations-Schnittstelle bzw. als Remote-I/O eines Meßsystems ausgebildete und/oder batteriegespeiste, Elektronik, umfassend:
- einen Mikrocontroller mit einem Steuereingang, mit wenigstens einem ersten Steuerausgang und mit einem, beispielsweise als eine asynchrone serielle Schnittstelle (UART) oder als Schalteingang ausgebildeten, Signaleingang;
- sowie eine Schnittstellenschaltung mit wenigstens einem ersten Anschlußterminal, mit einem Steuerausgang, mit einem ersten Steuereingang und mit einem Signalausgang.

Bei der erfindungsgemäßen Elektronik ist
- der Steuerausgang der Schnittstellenschaltung mit dem Steuereingang des Mikrocontrollers,
- der erste Steuerausgang des Mikrocontrollers mit dem ersten Steuereingang der Schnittstellenschaltung
- und der Signalausgang der Schnittstellenschaltung mit dem Signaleingang des Mikrocontrollers elektrisch verbunden.

Sowohl der Mikrocontroller als auch die Schnittstellenschaltung weist jeweils einen ersten Betriebsmodus und jeweils wenigstens einen zweiten Betriebsmodus auf, wobei der Mikrocontroller eingerichtet ist, in dessen ersten Betriebsmodus am ersten Steuerausgang eine Anweisung auszugeben, die die Schnittstellenschaltung veranlaßt, in deren ersten Betriebsmodus zu operieren, und wobei die Schnittstellenschaltung eingerichtet ist, zumindest in deren ersten Betriebsmodus ein am ersten Anschlußterminal anliegendes Eingangssignal zu differenzieren, nämlich in ein eine Ableitung des Eingangssignals nach der Zeit repräsentierendes Ableitungssignal zu konvertieren sowie mittels nämlichen Ableitungssignals ein binäres Steuersignal zu generieren und am Steuerausgang auszugeben. Zudem ist der Mikrocontroller eingerichtet, in dessen zweiten Betriebsmodus am ersten Steuerausgang eine Anweisung auszugeben, die die Schnittstellenschaltung in deren zweiten Betriebsmodus operieren läßt, und ist die Schnittstellenschaltung eingerichtet, in deren zweiten Betriebsmodus ein am ersten Anschlußterminal anliegendes, beispielsweise IEC 61158 CPF15:2007 und/oder EIA-485 konformes, digitales Eingangssignal in ein dieses repräsentierendes binäres erstes Ausgangssignal zu wandeln und nämliches erstes Ausgangssignal am Signalausgang auszugeben. Der Mikrocontroller ist zudem eingerichtet, in dessen zweiten Betriebsmodus ein am Signaleingang anliegendes, beispielsweise UART konformes, digitales Eingangssignal zu empfangen und zu verarbeiten, beispielsweise nämlich eine im Eingangssignal enthaltenen Anweisung auszuführen und/oder eine im Eingangssignal enthaltene Nachricht auszuwerten.

Darüberhinaus besteht die Erfindung auch in einem mittels einer solchen Elektronik gebildeten Kommunikationssystem, das zusätzlich einen mit der Elektronik elektrisch verbundenen Signalgeber umfaßt, der eingerichtet ist, ein, insb. IEC 61158 CPF15:2007 konformes, Digitalsignal an die Elektronik zu senden; und/oder besteht die Erfindung auch in einem mittels einer solchen Elektronik gebildeten Meßsystem, das zusätzlich auch einen mit der Elektronik elektrisch gekoppelten Sensor umfaßt, wobei der Mikrocontroller eingerichtet ist, zumindest in dessen ersten Betriebsmodus ein mittels des Sensors generiertes Sensorsignal zu empfangen und auszuwerten, beispielsweise nämlich Meßwerte für wenigstens eine mittels des Sensors erfaßte Meßgröße zu ermitteln.

Nach einer ersten Ausgestaltung der Erfindung ist ferner vorgesehen, daß die Schnittstellenschaltung eingerichtet ist, auf eine Änderungs des digitalen Eingangssignals, beispielsweise nämlich einer Änderung eines Logikpegels des Eingangssignals und/oder auf eine einer Flankensteilheit von mehr als 1 V/µs aufweisende Signalflanke des Eingangssignals entsprechende Änderung, mit der Kodierung einer Anweisung (IRQ) in das Steuersignal reagiert, die den Mikrocontroller in dessen zweiten Betriebsmodus operieren läßt bzw. die den Mikrocontroller veranlaßt, von dessen ersten Betriebsmodus in dessen zweiten Betriebsmodus zu wechseln;

Nach einer zweiten Ausgestaltung der Erfindung ist ferner vorgesehen, daß der Mikrocontroller eingerichtet ist, im ersten Betriebsmodus das am Steuereingang anliegende Steuersignal der Schnittstellenschaltung zu verarbeiten, beispielsweise nämlich auf einen einen Wechsel vom ersten Betriebsmodus in den zweiten Betriebsmodus veranlassende Anweisung mit einem Wechsel in den zweiten Betriebsmodus zu reagieren.

Nach einer dritten Ausgestaltung der Erfindung ist ferner vorgesehen, daß die Schnittstellenschaltung eingerichtet ist, im ersten Betriebsmodus ein am ersten Anschlußterminal anliegendes digitales Eingangssignal nicht in ein dieses repräsentierendes Ausgangssignal zu wandeln bzw. kein ein am ersten Anschlußterminal anliegendes digitales Eingangssignal repräsentierendes Ausgangssignal am Signalausgang auszugeben.

Nach einer vierten Ausgestaltung der Erfindung ist ferner vorgesehen, daß der Mikrocontroller eingerichtet ist, im ersten Betriebsmodus ein am Signaleingang anliegendes digitales Eingangssignal nicht zu verarbeiten, beispielsweise nämlich auch eine darin enthaltene Anweisung nicht auszuführen.

Nach einer fünften Ausgestaltung der Erfindung ist ferner vorgesehen, daß der Mikrocontroller eingerichtet ist, zeitgesteuert vom zweiten Betriebsmodus in den ersten Betriebsmodus zu wechseln, beispielsweise falls kein digitales und/oder UART konformes Eingangssignal am Signaleingang anliegt.

Nach einer sechsten Ausgestaltung der Erfindung ist ferner vorgesehen, daß die Schnittstellenschaltung und der Mikrocontroller eingerichtet sind, zeitgleich im jeweiligen zweiten Betriebsmodus zu operieren, derart, daß das erste Ausgangssignal am Signalausgang der Schnittstellenschaltung das am Signaleingang des Mikrocontrollers anliegende digitale Eingangssignal bildet und daß der Mikrocontroller nämliches erstes Ausgangssignal empfängt und verarbeitet.

Nach einer siebenten Ausgestaltung der Erfindung ist ferner vorgesehen, daß die Schnittstellenschaltung ein, beispielsweise passives, Signalfilter, beispielsweise ein Hochpaßfilter, aufweist.

Nach einer achten Ausgestaltung der Erfindung ist ferner vorgesehen, daß die Schnittstellenschaltung zum Differenzieren des am ersten Anschlußterminal anliegenden Eingangssignals ein, beispielsweise passives und/oder eine Grenzfrequenz von mehr als 800 Hz aufweisendes, Hochpaßfilter aufweist.

Nach einer neunten Ausgestaltung der Erfindung ist ferner vorgesehen, daß die Schnittstellenschaltung eingerichtet ist, im Betrieb benötigte elektrische Leistung zumindest zeitweise und/oder zumindest anteilig aus dem am ersten Anschlußterminal anliegenden Eingangssignal zu beziehen, beispielsweise nämlich im ersten Betriebsmodus benötigte elektrische Leistung ausschließlich aus dem am ersten Anschlußterminal anliegenden Eingangssignal zu beziehen.

Nach einer zehnten Ausgestaltung der Erfindung ist ferner vorgesehen, daß die Schnittstellenschaltung im ersten Betriebsmodus ein Leistungsbedarf aufweist, der weniger als 50 mW beträgt.

Nach einer elften Ausgestaltung der Erfindung ist ferner vorgesehen, daß die Schnittstellenschaltung im zweiten Betriebsmodus ein Leistungsbedarf aufweist, der höher ist als ein Leistungsbedarf, den die Schnittstellenschaltung im ersten Betriebsmodus aufweist, beispielsweise nämlich mehr als 300% des Leistungsbedarfs der Schnittstellenschaltung im ersten Betriebsmodus und/oder mehr als 150 mW beträgt.

Nach einer zwölften Ausgestaltung der Erfindung ist die Schnittstellenschaltung ferner eingerichtet, sowohl die im ersten Betriebsmodus als auch die im zweiten Betriebsmodus benötigte elektrische Leistung jeweils ausschließlich aus dem am ersten Anschlußterminal anliegenden Eingangssignal zu beziehen.

Nach einer ersten Weiterbildung der Erfindung ist ferner vorgesehen, daß der Mikrocontroller einen, beispielsweise als eine asynchrone serielle Schnittstelle (UART) ausgebildeten, Signalausgang und die Schnittstellenschaltung einen, beispielsweise als eine asynchrone serielle Schnittstelle (UART) ausgebildeten, Signaleingang aufweist, und daß der Signalausgang des Mikrocontrollers mit dem Signaleingang der Schnittstelle elektrisch verbunden ist.

Nach einer ersten Ausgestaltung der ersten Weiterbildung ist ferner vorgesehen, daß sowohl der Mikrocontroller als auch die die Schnittstellenschaltung jeweils wenigstens einen dritten Betriebsmodus aufweist, derart, daß der Mikrocontroller eingerichtet ist, in dessen dritten Betriebsmodus am Signalausgang ein, beispielsweise UART konformes, digitales zweites Ausgangssignal auszugeben und daß die Schnittstellenschaltung eingerichtet ist, in deren dritten Betriebsmodus ein am Signaleingang anliegendes, beispielsweise UART konformes, digitales Eingangssignal in ein, beispielsweise IEC 61158 CPF15:2007 und/oder EIA-485 konformes, digitales drittes Ausgangssignal zu wandeln. Die Schnittstellenschaltung kann ferner eingerichtet sein, im dritten Betriebsmodus das dritte Ausgangssignal am ersten Anschlußterminal auszugeben. Alternativ dazu kann die Schnittstellenschaltunng ein zweites Anschlußterminal aufweisen und kann die Schnittstellenschaltung zudem eingerichtet sein, im dritten Betriebsmodus das dritte Ausgangssignal an nämlichem zweiten Anschlußterminal auszugeben, beispielsweise aber auch sowohl im ersten Betriebsmodus als auch im zweiten Betriebsmodus ein am Signaleingang anliegendes Eingangssignal nicht in ein dieses repräsentierendes Ausgangssignal zu wandeln bzw. kein ein am Signaleingang anliegendes Eingangssignal repräsentierendes Ausgangssignal am zweiten Anschlußterminal auszugeben.

Nach einer zweiten Ausgestaltung der ersten Weiterbildung ist ferner vorgesehen, daß der Mikrocontroller einen zweiten Steuerausgang und die Schnittstellenschaltung eine zweiten Steuereingang aufweist und daß der zweite Steuerausgang des Mikrocontrollers mit dem zweiten Steuereingang der Schnittstellenschaltung elektrisch verbunden ist. Zudem kann der Mikrocontroller ferner eingerichtet sein, im dritten Betriebsmodus am zweiten Steuerausgang eine Anweisung auszugeben, die die Schnittstellenschaltung veranlaßt, in deren dritten Betriebsmodus zu operieren.

Nach einer dritten Ausgestaltung der ersten Weiterbildung ist der Mikrocontroller ferner eingerichtet, gesteuert durch das Eingangssignal am Signaleingang vom zweiten in den dritten Betriebsmodus zu wechseln.

Nach einer vierten Ausgestaltung der ersten Weiterbildung ist der Mikrocontroller ferner eingerichtet, nach der Ausgabe des digitalen Ausgangssignals am Signalausgang selbststätig vom dritten Betriebsmodus in den ersten Betriebsmodus zu wechseln.

Nach einer fünften Ausgestaltung der ersten Weiterbildung ist der Mikrocontroller ferner eingerichtet, im dritten Betriebsmodus ein am Signaleingang anliegendes digitales Eingangssignal nicht zu verarbeiten, beispielsweise nämlich auch keine am Signaleingang eingehende Anweisung auszuführen.

Nach einer sechsten Ausgestaltung der ersten Weiterbildung ist die Schnittstellenschaltung ferner eingerichtet, sowohl im ersten Betriebsmodus als auch im zweiten Betriebsmodus ein am Signaleingang anliegendes Eingangssignal nicht in ein dieses repräsentierendes Ausgangssignal zu wandeln bzw. kein ein am Signaleingang anliegendes Eingangssignal repräsentierendes Ausgangssignal am ersten Anschlußterminal auszugeben.

Nach einer siebenten Ausgestaltung der ersten Weiterbildung sind die Schnittstellenschaltung und der Mikrocontroller ferner eingerichtet, zeitgleich im jeweiligen dritten Betriebsmodus zu operieren, derart, daß das zweite Ausgangssignal am Signalausgang des Mikrocontrollers das am Signaleingang der Schnittstellenschaltung anliegende digitale Eingangssignal bildet und daß die Schnittstellenschaltung nämliches zweites Ausgangssignal empfängt und verarbeitet, beispielsweise nämlich in das dritte Ausgangssignal wandelt.

Nach einer achten Ausgestaltung der ersten Weiterbildung weist die Schnittstellenschaltung ferner einen, beispielsweise IEC 61158 CPF15:2007 und/oder EIA-485 kompatiblen und/oder monolithischen, Sendeempfänger (RS485), beispielsweise vom Typ SN65HVD1781 von Texas Instruments Inc. 2019 oder vom Typ THVD2450 von Texas Instruments Inc. 2019, auf, und ist das erste Anschlußterminal der Schnittstellenschaltung mittels wenigstens eines von BUS-Treiber/Empfänger-Anschlüsse des Sendeempfängers, der Signalausgang der Schnittstellenschaltung mittels eines Digitalausgangs des Sendeempfängers und der Signaleingang der Schnittstellenschaltung mittels eines Digitaleingangs des Sendeempfängers gebildet ist.

Nach einer zweiten Weiterbildung der Erfindung umfaßt die Elektronik weiters: eine, beispielsweise mittels eines elektrochemischen und/oder wiederaufladbaren Energiespeichers gebildete, Versorgungsschaltung, und ist ferner vorgesehen, daß die Versorgungsschaltung wenigstens einen ersten Versorgungsterminal aufweist und eingerichtet ist, am ersten Versorgungsterminal eine Betriebsspannung für den Mikrocontroller bereitzustellen, und daß der Mikrocontroller einen Versorgungsterminal aufweist, der mit dem ersten Versorgungsterminal der Versorgungsschaltung elektrisch verbunden ist.

Nach einer ersten Ausgestaltung der zweiten Weiterbildung ist ferner vorgesehen, daß die Versorgungsschaltung einen zweiten Versorgungsterminal aufweist und eingerichtet ist, am zweiten Versorgungsterminal eine Betriebsspannung für die Schnittstellenschaltung bereitzustellen, und daß die Schnittstellenschaltung einen Versorgungsterminal aufweist, der mit dem zweiten Versorgungsterminal der Versorgungsschaltung elektrisch verbunden ist.

Nach einer ersten Ausgestaltung der zweiten Weiterbildung ist ferner vorgesehen, daß die Schnittstellenschaltung einen, beispielsweise mittels eines Halbleiterrelais oder mittels eines Isolierschicht-Feldeffekttransistors gebildeten, elektronischen Hauptschalter aufweist, wobei sowohl der erste Steuereingang der Schnittstellenschaltung als auch der Versorgungsterminal der Schnittstellenschaltung mittels des Hauptschalters gebildet ist.

Nach einer dritten Weiterbildung der Erfindung weist die Schnittstellenschaltung einen, beispielsweise galvanisch getrennten, Gleichspannungswandler mit einem Wandlereingang und mit einem Wandlerausgang, beispielsweise einen Sperrwandler oder einen Gegentaktwandler, auf, und ist der Gleichspannungswandler eingerichtet, eine am Wandlereingang anliegende Eingangsgleichspannung in eine am Wandlerausgang anliegende Ausgangsgleichspannung mit einer von einer Spannungshöhe der Eingangsgleichspannung abweichenden Spannungshöhe zu konvertieren.

Nach einer vierten Weiterbildung der Erfindung weist die Schnittstellenschaltung ferner einen ersten Optokoppler mit einem optischen Sendeelement und einem optischen Empfängerelement auf, und ist ferner vorgesehen, daß der Steuerausgang der Schnittstellenschaltung mittels des ersten Optokopplers gebildet ist, derart, daß dessen optisches Empfängerelement mit dem Steuereingang des Mikrocontrollers elektrisch verbunden ist.

Nach einer Ausgestaltung der vierten Weiterbildung der Erfindung weist die Schnittstellenschaltung zudem einen zweiten Optokoppler mit einem optischen Sendeelement und einem optischen Empfängerelement auf, und ist ferner vorgesehen, daß der Signalausgang der Schnittstellenschaltung mittels des zweiten Optokopplers gebildet ist, derart, daß dessen optisches Empfängerelement mit dem Signaleingang des Mikrocontrollers elektrisch verbunden ist. Darüberhinaus kann die Schnittstellenschaltung zudem wenigstens einen dritten Optokoppler mit einem optischen Sendeelement und einem optischen Empfängerelement oder beispielsweise auch einen dritten Optokoppler mit einem optischen Sendeelement und einem optischen Empfängerelement und wenigstens einen vierten Optokoppler mit jeweils einem optischen Sendeelement und einem optischen Empfängerelement aufweisen, wobei beispielsweise der erste Steuereingang der Schnittstellenschaltung mittels des dritten Optokopplers gebildet sein kann, derart, daß dessen optisches Empfängerelement mit dem ersten Steuerausgang des Mikrocontrollers elektrisch verbunden ist.

Ein Grundgedanke der Erfindung besteht darin, die Schnittstellenschaltung der Elektronik, angesteuert von deren Mikrocontroller, selektiv in einem ersten Betriebsmodus oder bei Bedarf - etwa auf Anforderung eines mit der Schnittstellenschaltung elektrische verbundenen externen Signalgebers - in einem zweiten Betriebsmodus operieren zu lassen, derart, daß im ersten Betriebsmodus eine passive, nämlich eine ein allfällig am Anschlußterminal eingehendes Signal lediglich hinsichtlich wenigstens eines seiner physikalischen Signalparameter und/oder dessen zeitlichen Verlaufes auswertende Empfangsbereitschaft und im zweiten Betriebsmodus eine aktive, nämlich eine ein allfällig am Anschlußterminal eingehendes digitales Eingangssignal an den Mikrocontroller weiterleitende, ggf. auch das Eingangssignal dafür entsprechend konvertierende, Empfangsbereitschaft hergestellt ist; dies im besonderen in der Weise, daß die Schnittstellenschaltung (erst) in ihrem zweiten Betriebsmodus eine im Eingangssignal enthaltene Nachricht für den Mikrocontroller, beispielsweise eine Anweisung, in einer vom Mikrocontroller auswertbarer Form an diesen übermittelt. Im Ergebnis einer solchen Aufteilung der Funktionalität der Schnittstellenschaltung hinsichtlich von deren Empfangsbereitschaft gegenüber einem am Anschlußterminal gelegentlich bzw. azyklisch eingehenden digitalen Eingangssignal kann der Energiebedarf der Schnittstellenschaltung in erheblichem Maße verringert werden, indem die Schnittstellenschaltung erst bei Bedarf, nämlich erst nach Eingang des digitalen Eingangssignals in dem vergleichsweise energieintensiven zweiten Betriebsmodus operieren gelassen wird; dies in vorteilhafter Weise auch derart, daß die im Betrieb der Elektronik so auch eine Verringerung der vom externen Signalgeber insgesamt eingespeisten elektrischen Energie erreicht werden kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: schematisch nach Art eines Blockschaltbildes eine erfindungsgemäße Elektronik;
- Fig. 2: schematisch nach Art eines Blockschaltbildes eine Variante einer Elektronik gemäß Fig. 1;
- Fig. 3: schematisch nach Art eines Blockschaltbildes eine weitere Variante einer Elektronik gemäß Fig. 1;
- Fig. 4: schematisch nach Art eines Blockschaltbildes ein für eine Elektronik gemäß Fig. 1, 2 bzw. 3 geeignete Schnittstellenschaltung; und
- Fig. 5, 6, 7: jeweils schematisch nach Art eines Blockschaltbildes verschiedene Komponenten einer für eine Elektronik gemäß Fig. 1, 2 bzw. 3 geeigneten Schnittstellenschaltung.

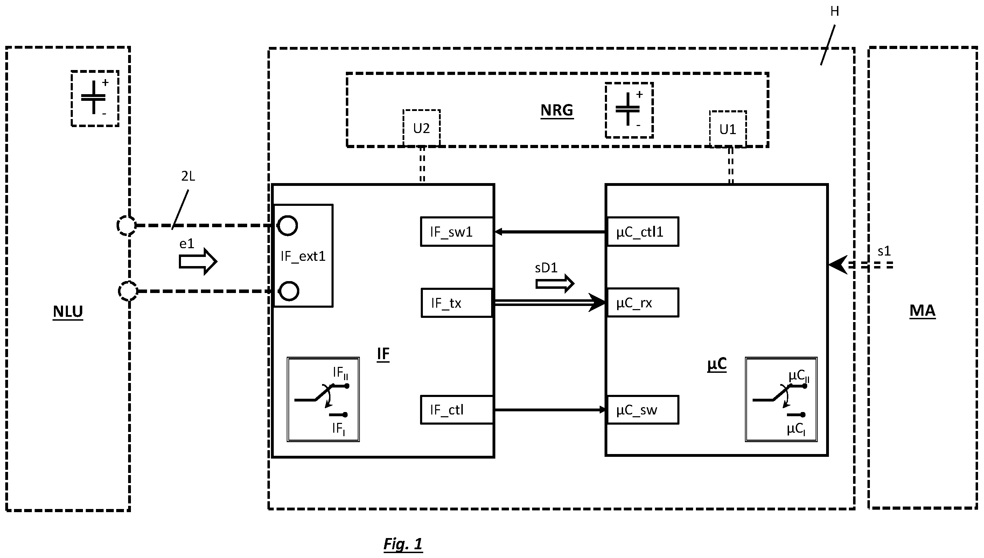

In Fig. 1, 2 und 3 sind verschiedene Ausführungsbeispiele für eine mittels eines Mikrocontrollers µC und einer daran angeschlossenen Schnittstellenschaltung IF gebildete Elektronik schematisch dargestellt. Die Elektronik kann, wie auch in den Fign. 1, 2 bzw. 3 jeweils angedeutet, beispielsweise Bestandteil eines zusätzlich einen mit der Elektronik elektrisch verbundenen, ggf. auch davon entfernt angeordneten Signalgeber NLU aufweisenden Kommunikationssystems sein. Bei dem Signalgeber NLU kann es sich beispielsweise um eine Fernsteuerung (*Remote-I*/*O*), eine speicherprogrammierbare Steuerung (SPS), einen Busmaster in einem Feldbus, beispielsweise gemäß dem Industriestandard IEC 61158:1999, insb. gemäß einer der

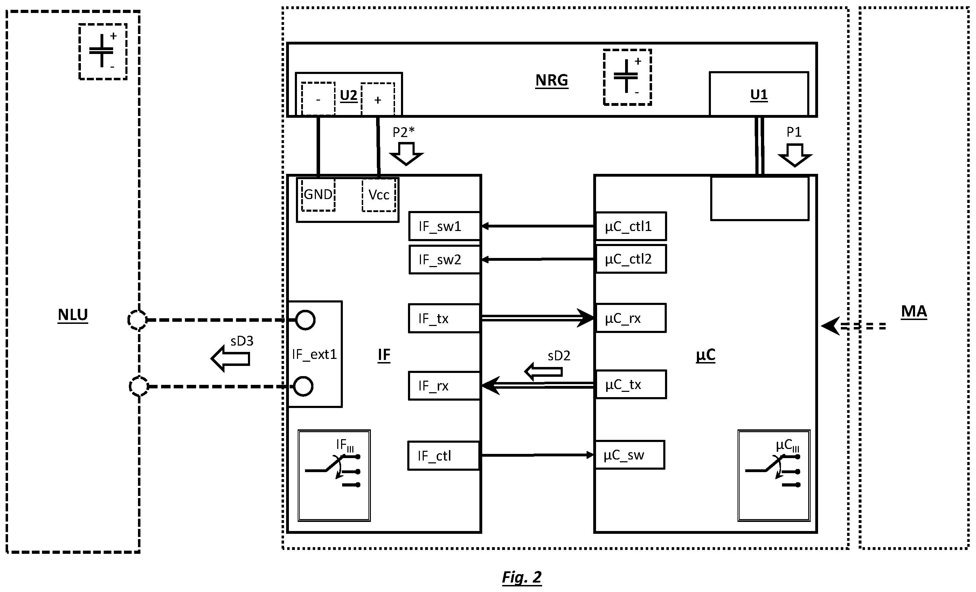

Familien CPF1 (FOUNDATION FIELDBUS), CPF3 (PROFIBUS), CPF9 (HART) oder CPF15 (MODBUS), oder auch um ein Funkmodul bzw. einen Funkadapter, beispielsweise gemäß IEEE 802.15.4:2007 (WirelessHART), handeln, wobei der Signalgeber NLU netz- und/oder batteriegespeist sein kann. Alternativ oder in Ergänzung kann die Elektronik auch Bestandteil eines Meßsystems - beispielsweise nämlich eines Meß- und/oder Schaltgeräts der industriellen Meß- und Automatisierungstechnik - mit einem mit der Elektronik elektrisch gekoppelten Sensor MA, beispielsweise nämlich einem Durchfluß-Sensor, sein, der wiederum dafür eingerichtet ist, wenigstens eine physikalische oder chemische Meßgröße zu erfassen und wenigstens ein nämliche Meßgröße repräsentierendes Meßsignal s1 zu liefern, insb. nämlich für eine Verarbeitung in der Elektronik bereitzustellen. Die Elektronik kann ferner eingerichtet sein, nämliches Meßsignal s1 zu empfangen und entsprechend zu verarbeiten, beispielsweise nämlich die wenigstens eine Meßgröße quantifizierende, ggf. digitale Meßwerte zu ermitteln. Darüberhinaus kann die Elektronik, wie auch in den Fign. 1 und 2 jeweils angedeutet, innerhalb eines Schutzgehäuse H angeordnet sein, das zudem unter Bildung eines Meßgräts in Kompaktbauweise beispielsweise unmittelbar am vorbezeichneten Sensor MA angebracht sein kann.

Wie aus Fig. 1, 2 bzw. 3 oder auch deren Zusammenschau jeweils ersichtlich, weist die Schnittstellenschaltung IF wenigstens einen ersten Anschlußterminal IF_ext1, einen Steuerausgang IF_ctl, einen ersten Steuereingang IF_sw1 sowie einen Signalausgang IF_tx auf. Zudem weist der Mikrocontroller µC einen Steuereingang µC_sw, wenigstens einen ersten Steuerausgang µC_ctl1 sowie wenigstens einen Signaleingang µC_rx auf. Bei dem Steuereingang µC_sw des Mikrocontrollers µC kann es sich beispielsweise um einen bei konventionellen Mikroprozessoren bzw. Mikrocontroller typischerweise vorgesehenen Interrupt-Eingang handeln bzw. der Mikrocontroller µC kann eingerichtet sein, auf eine am Steuereingang µC_sw eingehende (Steuer-)Anweisung *(IRQ - interrupt request),* beispielsweise in Form eines einzelnen Bits, wie z.B. logisch Eins, mit einer zumindest vorübergehende Unterbrechung eines zunächst ablaufenden Programms bzw. einer Ausführung einer entsprechend vorgegebene Unterbrechungsroutine *(ISR - interrupt service routine, interrupt handler)* zu reagieren. Alternativ oder in Ergänzung kann der Signaleingang µC_rx beispielsweise als ein einfacher Schalteingang oder beispielsweise auch als eine asynchrone serielle Schnittstelle *(UART - universal asynchronous receiver transmitter)* ausgebildet bzw. mittels eines entsprechenden Funktionsblocks des Mikrocontrollers µC realisiert sein. Wie jeweils in Fig. 1, 2 und 3 schematisch dargestellt, sind der Steuerausgang IF_ctl der Schnittstellenschaltung IF mit dem Steuereingang µC_sw des Mikrocontrollers µC, der Signalausgang IF_tx der Schnittstellenschaltung IF mit dem Signaleingang µC_rx des Mikrocontrollers µC und der Steuerausgang µC_ctl1 des Mikrocontrollers µC mit dem Steuereingang IF_sw1 der Schnittstellenschaltung IF elektrisch verbunden. Darüberhinaus ist der Anschlußterminal IF_ext1 der Schnittstellenschaltung IF dafür eingerichtet, mit einer externen Signalleitung 2L elektrisch verbunden zu werden, beispielsweise derart, daß die Schnittstellenschaltung IF bzw. die damit gebildeten Elektronik mittels der Signalleitung 2L an einen korrespondierenden Anschlußterminal des vorbezeichneten Signalgebers NLU angeschlossen ist. Die Elektronik ist zudem ferner dafür eingerichtet, via Anschlußterminal IF_ext1 der Schnittstellenschaltung IF ein binäres Eingangssignal e1 zu empfangen und ggf. mittels der Schnittstellenschaltung IF und dem Mikrocontroller µC entsprechend zu verarbeiten bzw. auszuwerten. Bei dem Eingangssignal e1 kann es sich beispielsweise um ein einen einfachen Schaltbefehl vom Signalgeber NLU übertragendes binbäres (Schalt-)Signal oder beispielsweise auch um ein Digitalsignal handeln, das beispielsweise ein vom Signalgeber NLU ausgesendetes, beispielsweise auch zum Industriestandard IEC 61158 CPF15:2007 konformes, Telegramm überträgt.

Nach einer weiteren Ausgestaltung der Erfindung weist der Mikrocontroller µC ferner einen, beispielsweise auch als eine asynchrone serielle Schnittstelle ausgebildeten, Signalausgang µC_tx auf und weist die Schnittstellenschaltung IF einen, beispielsweise gleichermaßen wie der vorbezeichnete Signalausgang µC_tx als eine asynchrone serielle Schnittstelle ausgebildeten, Signaleingang IF_rx auf. Wie in Fig. 2 dargestellt, sind der Signalausgang µC_tx des Mikrocontrollers und der Signaleingang IF_rx der Schnittstelle IF zudem miteinander elektrisch verbunden.

Bei der erfindungsgemäßen Elektronik weist zudem sowohl der Mikrocontroller µC als auch die Schnittstellenschaltung IF jeweils einen ersten Betriebsmodus, nämlich einen Betriebsmodus µC_{I} bzw. einen Betriebsmodus IF_{I}, und jeweils wenigstens einen zweiten Betriebsmodus, nämlich einen Betriebsmodus µC_{II} bzw. einen Betriebsmodus IF_{II}, auf.

Der Mikrocontroller µC ist im besonderen dafür eingerichtet, in dessen ersten Betriebsmodus µC_{I} am Steuerausgang µC_ctl1 eine Anweisung auszugeben, die die Schnittstellenschaltung veranlaßt, in deren Betriebsmodus IF_{I} zu operieren, beispielsweise nämlich in den Betriebsmodus IF_{I}, zu wechseln bzw. den Betriebsmodus IF_{I} zu aktivieren. Die vorbezeichnete Anweisung, kann beispielsweise ein einfacher Schaltbefehl oder beispielsweise ein in einem von der Schnittstellenschaltung IF abzuarbeitenden Programm auszuführendes Statement sein. Zudem ist der Mikrocontroller µC ferner dafür eingerichtet, in dessen zweiten Betriebsmodus µC_{II} am Steuerausgang µC_ctl1 eine Anweisung auszugeben, die die Schnittstellenschaltung IF in deren zweiten Betriebsmodus IF_{II} operieren läßt, sowie ein an dessen Signaleingang µC_rx anliegendes, beispielsweise nämlich UART konformes, digitales Eingangssignal zu empfangen und zu verarbeiten; dies im besonderen derart, daß eine in dem am vorbezeichneten Signaleingang µC_rx anliegenden Eingangssignal enthaltene Anweisung, beispielsweise ein einfacher Schaltbefehl oder ein im Mikrocontroller µC ablaufendes Programm beeinflussendes Statement, vom Mikrocontroller µC ausgeführt und/oder eine in nämlichem Eingangssignal enthaltene Nachricht vom Mikrocontroller µC ausgewertet wird. Für den vorbezeichneten Fall, daß die Elektronik Bestandteil eines Meßsystems ist, kann der Mikrocontroller µC zudem dafür eingerichtet sein, zumindest in dessen ersten Betriebsmodus µC_{I}, beispielsweise aber auch sowohl im Betriebsmodus µC_{I} als auch im Betriebsmodus µC_{II}, das vorbezeichnete, mittels des Sensors MA generierte Sensorsignal s1 zu empfangen und auszuwerten, beispielsweise nämlich Meßwerte für die wenigstens eine mittels des Sensors MA erfaßte Meßgröße zu ermitteln.

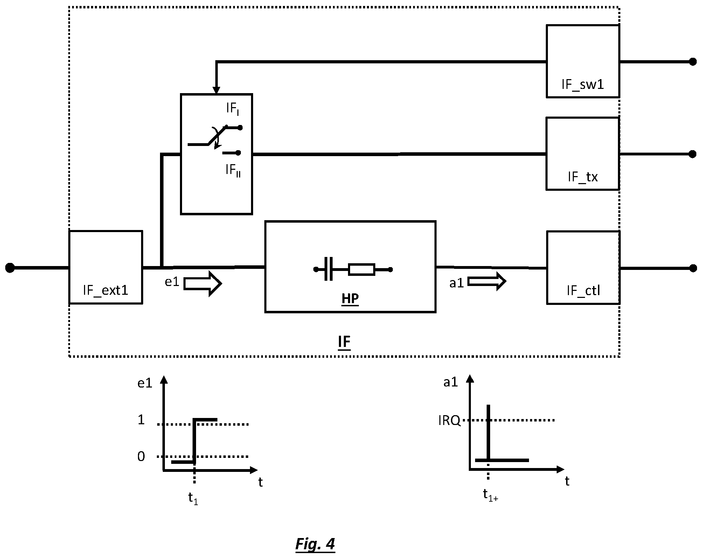

Bei der erfindungsgemäßen Elektronik ist die Schnittstellenschaltung IF wiederum dafür eingerichtet, zumindest im ersten Betriebsmodus IF_{I} das an deren Anschlußterminal IF_ext1 anliegende Eingangssignal e1 zu differenzieren, nämlich, wie auch in Fig. 4 dargestellt, in ein eine Ableitung des Eingangssignals e1 nach der Zeit repräsentierendes Ableitungssignal a1 zu konvertieren sowie mittels nämlichen Ableitungssignals a1 ein binäres Steuersignal zu generieren und am Steuerausgang IF_ctl auszugeben; dies im besonderen in der Weise, daß die Schnittstellenschaltung IF zumindest im ersten Betriebsmodus IF_{I} - beispielsweise nämlich auch nur im ersten Betriebsmodus IF_{I} - auf eine vorgegebene Änderungsgeschwindigkeit des Eingangssignals e1 mit der Kodierung einer Anweisung IRQ in das Steuersignal IF_ctl reagiert, die den Mikrocontroller µC in dessen zweiten Betriebsmodus µC_{II} operieren läßt bzw. die den Mikrocontroller µC veranlaßt, von dessen ersten Betriebsmodus µC_{I} in dessen zweiten Betriebsmodus µC_{II} zu wechseln. Das Ableitungssignal a1 kann, wie auch in Fig. 4 angedeutet, im Falle einer Änderung eines Logikpegels des binären Eingangssignals e1, beispielsweise von logisch Null auf logisch Eins, einen dieser Änderung entsprechenden pulsförmigen, bei sprunghaften Änderung nämlich auch nadelförmigen Pegelverlauf aufweisen, derart, daß das Ableitungssignal a1 vorübergehend einen die vorbezeichnete Anweisung IRQ kodierendem Mindestsignalpegel erreicht bzw. überschreitet. Darüberhinaus ist der Mikrocontroller nach einer weiteren Ausgestaltung der Erfindung entsprechend eingerichtet, im Betriebsmodus µC_{I} das am Steuereingang µC_sw anliegende Steuersignal der Schnittstellenschaltung IF zu verarbeiten, beispielsweise nämlich auf die vorbezeichnete, den Wechsel vom Betriebsmodus µC_{I} in den Betriebsmodus µC_{II} veranlassende Anweisung IRQ mit einem dementsprechenden Wechsel in den Betriebsmodus µC_{II} zu reagieren.

Nach einer weiteren Ausgestaltung der Erfindung ist die Schnittstellenschaltung IF im besonderen dafür eingerichtet, die vorbezeichnete Anweisung IRQ in das Steuersignal am Steuerausgang IF_ctl zu kodieren bzw. nämliches Steuersignal zumindest vorübergehend mit einem dementsprechenden Signalpegel am Steuerausgang IF_ctl auszugeben, falls die Änderungsgeschwindigkeit des Eingangssignals e1 einer eine Flankensteilheit von mehr als 1 V/µs aufweisenden Signalflanke und/oder einer auf den nominell zu erreichenden Logikpegel normierten Änderungsgeschwindigkeit von mehr als 90%/µs entspricht und/oder falls die Änderungsgeschwindigkeit des Eingangssignals e1 einer Änderung eines Logikpegels eines zum Industriestandard IEC 61158 CPF15:2007 (MODBUS) und/oder EIA-485 konformen digitalen Eingangssignals entspricht. Nach einer weiteren Ausgestaltung der Erfindung ist die Schnittstellenschaltung IF zudem eingerichtet, das Ableitungssignal a1 direkt als Steuersignal am Steuerausgang IF_ctl auszugeben. Zum Differenzieren des Eingangssignals e1 bzw. zum Generieren des Ableitungssignals a1 kann die Schnittstellenschaltung beispielsweise ein dementsprechendes Signalfilter, beispielsweise nämlich ein Hochpaßfilter erster oder ggf. auch höherer Ordnung, aufweisen. Eine (untere) Grenzfrequenz eines solchen Hochpaßfilters kann, nicht zuletzt im Falle einer Verwendung für ein zum Industriestandard IEC 61158 CPF15:2007 und/oder EIA-485 konformen digitalen Eingangssignals, beispielsweise auf größer als 800 Hz eingestellt sein. Darüberhinaus ist die Schnittstellenschaltung IF der erfindungsgemäßen Elektronik aber auch dafür eingerichtet, in deren zweiten Betriebsmodus IF_{II} ein am Anschlußterminal IF_ext1 anliegendes, beispielsweise IEC 61158 CPF15:2007 und/oder EIA-485 konformes, digitales Eingangssignal, beispielsweise nämlich das vorbezeichnete Eingangssignal e1, in ein dieses repräsentierendes binäres erstes Ausgangssignal sD1 zu wandeln und nämliches Ausgangssignal sD1 am Signalausgang IF_tx auszugeben, derart, daß das Ausgangssignal sD1 am Signaleingang µC_rx des Mikrocontrollers µC anliegt bzw. das vorbezeichnete Eingangssignal am Signaleingang µC_rx des Mikrocontrollers µC bildet. Dementsprechend sind die Schnittstellenschaltung IF und der Mikrocontroller µC nach einer weiteren Ausgestaltung der Erfindung zudem auch eingerichtet, zumindest vorübergehend zeitgleich im jeweiligen zweiten Betriebsmodus IF_{II} bzw. µC_{II} zu operieren; dies im besonderen in der Weise, daß das Ausgangssignal am Signalausgang IF_tx der Schnittstellenschaltung IF das am Signaleingang µc_rx des Mikrocontrollers µC anliegende digitale Eingangssignal bildet und daß der Mikrocontroller µC nämliches erstes Ausgangssignal empfängt und verarbeitet. Nach einer weiteren Ausgestaltung der Erfindung ist die Schnittstellenschaltung zudem eingerichtet, in deren Betriebsmodus IF_{I} ein am Anschlußterminal IF_ext1 anliegendes digitales Eingangssignal zu blockieren, nämliche nicht in ein dieses repräsentierendes Ausgangssignal zu wandeln bzw. kein Ausgangssignal am Signalausgang IF_tx auszugeben, das ein am Anschlußterminal IF_ext1 anliegendes digitales Eingangssignal repräsentiert, und/oder ist der Mikrocontroller µC eingerichtet, in dessen Betriebsmodus µC_{I} ein am Signaleingang µC_rx anliegendes digitales Eingangssignal zu blockieren, nämlich nicht zu verarbeiten, insb. nämlich auch darin enthaltene Anweisungen nicht auszuführen. Darüberhinaus kann der Mikrocontroller µC vorteilhaft auch eingerichtet sein, zeitgesteuert von dessen Betriebsmodus µC_{II} in dessen Betriebsmodus µC_{I} zu wechseln; dies nicht zuletzt für den Fall, daß kein digitales Eingangssignal und/oder kein UART konformes Eingangssignal am Signaleingang µC_rx anliegt.

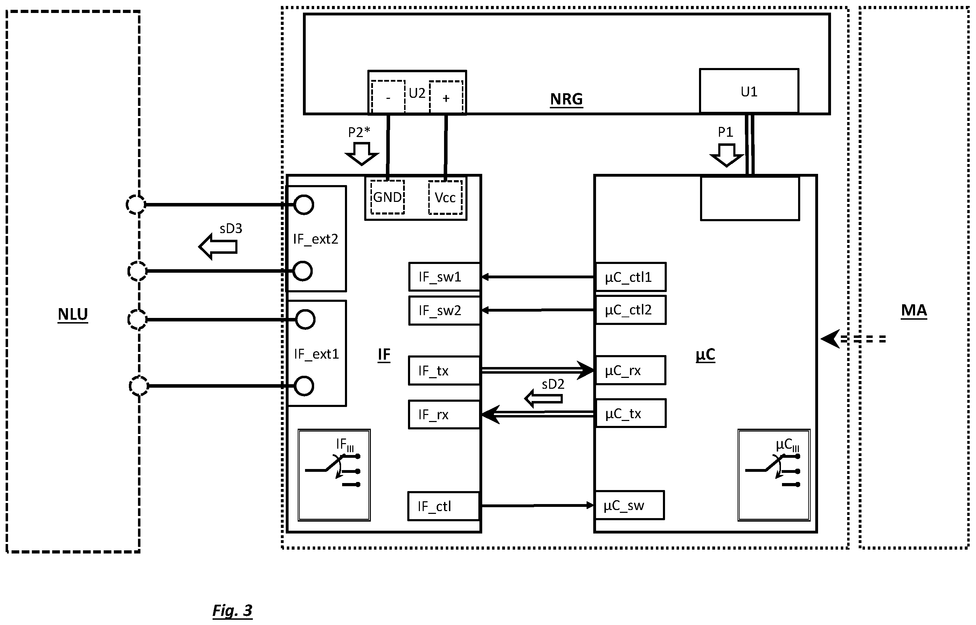

Für den erwähnten Fall, daß der Mikrocontroller µC einen Signalausgang µC_tx und die Schnittstellenschaltung IF einen mit nämlichen Signalausgang µC_tx elektrisch verbundenen Signaleingang IF_rx aufweisen, weist nach einer weiteren Ausgestaltung der Erfindung sowohl der Mikrocontroller µC als auch die die Schnittstellenschaltung IF jeweils wenigstens auch einen dritten Betriebsmodus, nämlich einen Betriebsmodus µC_{III} bzw. einen Betriebsmodus IF_{III}, auf. Der Mikrocontroller µC ist, wie auch in Fig. 3 angedeutet, dann zudem auch dafür eingerichtet, im Betriebsmodus µC_{III} am Signalausgang µC_tx ein digitales zweites Ausgangssignal sD2 auszugeben. Zudem ist die Schnittstellenschaltung IF eingerichtet, im Betriebsmodus IF_{III} ein am Signaleingang IF_rx anliegendes digitales Eingangssignal in ein digitales drittes Ausgangssignal sD3 zu wandeln. Im besonderen sind die Schnittstellenschaltung IF und der Mikrocontroller µC ferner eingerichtet, zumindest vorübergehend zeitgleich im jeweiligen dritten Betriebsmodus µC_{III} bwz. IF_{III} zu operieren, derart, daß das Ausgangssignal sD2 am Signalausgang µC_tx das am Signaleingang IF_rx anliegende digitale Eingangssignal bildet und daß die Schnittstellenschaltung IF nämliches Ausgangssignal sD2 empfängt und verarbeitet, beispielsweise nämlich in das Ausgangssignal sD3 wandelt. Das Ausgangssignal sD2 kann beispielsweise ein UART konformes Digitalsignal sein. Alternativ oder in Ergänzung kann es sich bei dem Ausgangssignal sD3 um ein zu einem der vorbezeichneten Industriestandards IEC 61158 CPF15:2007 und/oder EIA-485 konformes Digitalsignal handeln. Für den erwähnten Fall, daß die Elektronik Bestandteil eines Meßsystems ist, kann der Mikrocontroller µC im besonderen dafür eingerichtet sein, in dessen Betriebsmodus µC_{III} für die wenigstens eine mittels des Sensors MA erfaßte Meßgröße ermittel Meßwerte mittels des Ausgangssignals sD2 an die Schnittstellenschaltung IF zu übertragen bzw. kann die Schnittstellenschaltung IF zudem eingerichtet sein, mit dem Ausgangssignal sD2 empfangene Meßwerte mittels des Ausgangssignals sD3 entsprechend auszugeben.

Nicht zuletzt für den Fall, daß der vorbezeichnete Signalgeber NLU eingerichtet ist, via Signalleitung 2L sowohl das Eingangssignal e1 auszusenden als auch das Ausgangssignal sD3 zu empfangen und entsprechend zu verarbeiten, mithin das somit gebildete Kommunikationssystem dafür vorgesehen ist, in einem Wechselbetrieb (Halbduplex) Daten zwischen Elektronik und Signalgeber NLU auszutauschen, ist die Schnittstellenschaltung ferner eingerichtet, in deren Betriebsmodus IF_{III} das Ausgangssignal sD3 am Anschlußterminal IF_ext1 auszugeben. Alternativ kann die Schnittstellenschaltungn IF, wie auch in Fig. 2 angedeutet, ferner auch ein zweites Anschlußterminal IF_ext2 aufweisen und kann die Schnittstellenschaltung IF zudem eingerichtet sein, in deren Betriebsmodus IF_{III} das vorbezeichnete Ausgangssignal sD3 an nämlichem Anschlußterminal IF_ext2 auszugeben, beispielsweise um Daten mit dem vorbezeichneten Signalgeber NLU in einem Gegenbetrieb (Vollduplex) austauschen zu können. Für diesen Fall kann die Schnittstellenschaltung IF kann ferner dementsprechend auch eingerichtet, sowohl im ersten Betriebsmodus IF_{I} als auch im zweiten Betriebsmodus IF_{II} ein am Signaleingang IF_rx allfällig anliegendes Eingangssignal zu blockieren, nämlich nicht in ein dieses repräsentierendes Ausgangssignal zu wandeln bzw. auch kein Ausgangssignal am vorbezeichneten Anschlußterminal IF_ext2 auszugeben, das ein am Signaleingang IF_rx anliegendes Eingangssignal repräsentiert.

Nach einer weiteren Ausgestaltung Erfindung ist der Mikrocontroller µC zudem dafür eingerichtet, gesteuert durch das Eingangssignal sD1 am Signaleingang µC_rx vom zweiten Betriebsmodus µC_{II} in den dritten Betriebsmodus µC_{III} zu wechseln, beispielsweise um mit dem Ausgangssignal sD2 eine Ausführung einer im Eingangssignal sD1 kodierten Anweisung zu bestätigen und/oder eine explizit im Eingangssignal sD1 enthaltene oder zumindest implizit damit übermittelte Anfrage entsprechend zu erwidern. Alternativ oder in Ergänzung kann der Mikrocontroller µC zudem auch eingerichtet sein, nach der Ausgabe des digitalen Ausgangssignals sD2 am Signalausgang µC_tx selbststätig vom Betriebsmodus µC_{III} wieder in den Betriebsmodus µC_{I} zu wechseln. Vorteilhaft kann die Schnittstellenschaltung IF ferner auch eingerichtet sein, sowohl in deren Betriebsmodus IF_{I} als auch in deren Betriebsmodus IF_{II} ein am Signaleingang IF_rx allfällig anliegendes Eingangssignal zu blockieren, nämlich nicht in ein dieses repräsentierendes Ausgangssignal zu wandeln bzw. kein Ausgangssignal am Anschlußterminal IF_ext1 auszugeben, das ein am Signaleingang IF_rx anliegendes Eingangssignal repräsentiert, und/oder kann der Mikrocontroller µC eingerichtet sein, im Betriebsmodus µC_{III} ein am Signaleingang µC_rx allfällig anliegendes digitales Eingangssignal nicht zu verarbeiten bzw. keine am Signaleingang eingehende Anweisung auszuführen.

Nach einer weiteren Ausgestaltung der Erfindung weist der Mikrocontroller µC ferner einen zweiten Steuerausgang µC_ctl2 und die Schnittstellenschaltung IF einen mit nämlichem Steuerausgang µC_ctl2 elektrisch verbundenen zweiten Steuereingang IF_sw2 auf. Für den vorbezeichneten Fall, daß das Mikrocontroller µC und Schnittstellenschaltung IF jeweils auch den dritten Betriebsmodus aufweisen, ist der Mikrocontroller µC zudem eingerichtet, in dessen Betriebsmodus µC_{III} am Steuerausgang µC_ctl2 eine Anweisung auszugeben, die wiederum die Schnittstellenschaltung IF veranlaßt, in deren Betriebsmodus IF_{III} zu operieren; dies beispielsweise auch derart, daß der Mikrocontroller µC im Betriebsmodus µC_{III} sowohl am Steuerausgang µC_ctl2 als auch am Steuerausgang µC_ctl1 eine entsprechende Anweisung für den Betriebsmodus µC_{III} and Schnittstellenschaltung IF ausgibt.

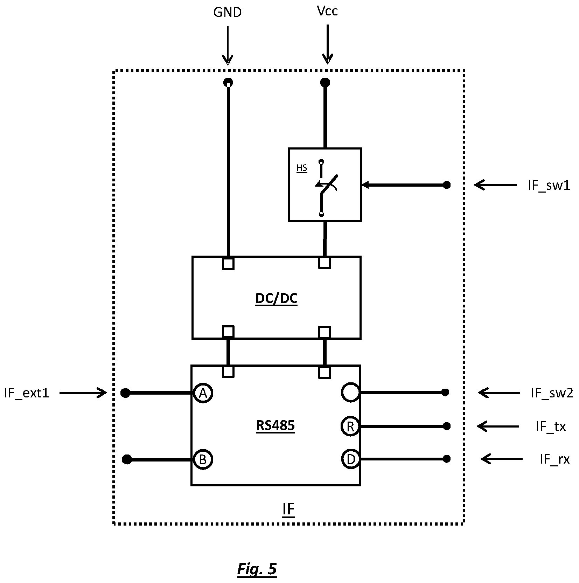

Zum Empfangen und Verarbeiten zumindest des am Anschlußterminal IF_ext1 eingehenden digitalen Eingangssignals e1 weist die Schnittstellenschaltung IF nach einer weiteren Ausgestaltung der Erfindung einen, beispielsweise zum Industriestandard IEC 61158 CPF15:2007 und/oder EIA-485 kompatiblen und/oder monolithischen, Sendeempfänger RS485 (Transceiver) auf. Nämlicher Sendeempfänger RS485 kann beispielsweise ein monolithischer, ggf. auch fehlergeschützter RS485-Sendeempfänger, beispielsweise ein SN65HVD1781 von Texas Instruments Inc., Dallas, Texas 75265, 2019 oder ein THVD2450 von Texas Instruments Inc., Dallas, Texas 75265, 2019, sein. Desweiteren ist vorgesehen, daß, wie auch in Fig. 5 schematisch dargestellt, der Sendeempfänger RS485 wenigstens zwei BUS-Treiber/Empfänger-Anschlüsse A, B, wenigstens einen Digitalausgang R, wenigstens einen Digitaleingang D und wenigstens einen Treiberaktivierungseingang DE aufweist und daß das Anschlußterminal IF_ext1 der Schnittstellenschaltung IF mittels wenigstens eines nämlicher BUS-Treiber/Empfänger-Anschlüsse A, B und der Signalausgang IF_tx der Schnittstellenschaltung IF mittels des Digitalausgangs R gebildet ist. Für den erwähnten Fall, daß der Mikrocontroller µC auch einen Signalausgang µC_tx und die Schnittstellenschaltung IF einen mit nämlichen Signalausgang µC_tx elektrisch verbundenen Signaleingang IF_rx aufweisen, kann der Signaleingang IF_rx der Schnittstellenschaltung zudem mittels des vorbezeichneten Digitaleingangs D des Sendeempfänger RS485 gebildet sein. Für den anderen erwähnten Fall, daß der Mikrocontroller µC einen Steuerausgang µC_ctl2 und die Schnittstellenschaltung IF einen mit nämlichen Steuerausgang µC_ctl2 elektrisch verbundenen Steuereingang IF_sw2 aufweisen, kann der Steuereingang IF_sw2 der Schnittstellenschaltung zudem mittels des vorbezeichneten Treiberaktivierungseingang DE des Sendeempfänger RS485 gebildet sein.

Zum Bereitstellen von im Betrieb durch den Mikrocontroller µC benötigter elektrischer Leistung P1 weist die Elektronik nach einer weiteren Ausgestaltung der Erfindung ferner eine Versorgungsschaltung NRG mit wenigstens einem ersten Versorgungsterminal U1 auf. Darüberhinaus weist auch der Mikrocontroller µC einen entsprechend Versorgungsterminal auf, der zudem mit dem Versorgungsterminal U1 der Versorgungsschaltung NRG elektrisch verbunden ist. Die beispielsweise mittels eines elektrochemischen und/oder wiederaufladbaren Energiespeichers gebildete Versorgungsschaltung NRG ist zudem dafür eingerichtet, am Versorgungsterminal U1 eine Betriebsspannung für den Mikrocontroller µC, beispielsweise nämlich eine unipolare oder bipolare Gleichspannung, bereitzustellen. Im Gegensatz dazu ist die Schnittstellenschaltung IF dafür eingerichtet, die im Betrieb benötigte elektrische Leistung bzw. die entsprechende Hilfsenergie zumindest zeitweise und/oder zumindest anteilig aus dem an deren Anschlußterminal IF_ext1 anliegenden Eingangssignal e1 zu beziehen. Dafür kann es sich bei dem vorbezeichneten, dem Differenzieren des Eingangssignals e1 dienlichen Signalfilter vorteilhaft auch um ein passives Signalfilter, beispielsweise nämlich ein mittels einer einfachen Reihenschaltung eines oder mehrerer Kondensatoren mit einem oder mehreren, ggf. zusätzlich auch als Strombegrenzungswiderstände wirkenden, ohmschen Widerständen gebildetes passives Hochpaßfilter handeln.

Nach einer weiteren Ausgestaltung der Erfindung weist die Schnittstellenschaltung in deren Betriebsmodus IF_{I} ein Leistungsbedarf auf, der weniger als 50 mW beträgt, und/oder ist die Schnittstellenschaltung IF eingerichtet, sowohl die in deren Betriebsmodus IF_{I} als auch die in deren Betriebsmodus IF_{II} benötigte elektrische Leistung jeweils ausschließlich aus dem am Anschlußterminal IF_rx anliegenden Eingangssignal e1 zu beziehen. Insbesondere kann die Schnittstellenschaltung IF auch als eine Passivkomponente der Elektronik ausgebildet, nämlich dafür eingerichtet sein, die im Betrieb benötigte elektrische Leistung P2 vollständig bzw. ausschließlich, aus dem an deren Anschlußterminal IF_ext1 anliegenden Eingangssignal e1 zu beziehen. Alternativ kann die Schnittstellenschaltung IF aber auch eingerichtet sein, im Betrieb benötigte elektrische Leistung bzw. Hilfsenergie anteilig von der Versorgungsschaltung NRG zu beziehen und kann die Versorgungsschaltung NRG, wie auch in Fig. 2 und 3 jeweils angedeutet, dementsprechend ferner auch eingerichtet sein, einen Anteil P2* von im Betrieb durch die Schnittstellenschaltung IF benötigter elektrischer Leistung bereitzustellen; dies nicht zuletzt für den Fall, daß die Schnittstellenschaltung in deren Betriebsmodus IF_{II} ein Leistungsbedarf aufweist, der höher ist als eine durch das Eingangssignal e1 in die Elektronik nominell eingespeiste elektrische Leistung, und/oder auch für den Fall, daß die Schnittstellenschaltung in deren Betriebsmodus IF_{II} ein Leistungsbedarf (P2*) aufweist, der höher ist als ein Leistungsbedarf (P1), den die Schnittstellenschaltung in deren Betriebsmodus IF_{I} aufweist, der beispielsweise nämlich mehr als 150 mW beträgt.

Zum Bereitstellen auch von im Betrieb durch die Schnittstellenschaltung benötigter elektrischer Leistung P2* weist die Versorgungsschaltung NRG nach einer weiteren Ausgestaltung der Erfindung dementsprechend einen zweiten Versorgungsterminal U2 auf, an dem im Betrieb zeitweise eine Betriebsspannung für die Schnittstellenschaltung IF, beispielsweise eine unipolare oder bipolare Gleichspannung, bereitgestellt ist, und weist entsprechend auch die Schnittstellenschaltung IF einen Versorgungsterminal auf, der mit dem Versorgungsterminal U2 der Versorgungsschaltung NRG elektrisch verbunden ist. Nicht zuletzt für den vorbezeichneten Fall, daß in der Schnittstellenschaltung IF der Sendeempfänger RS485 vorgesehen ist, kann der Versorgungsterminal der Schnittstellenschaltung IF, wie auch in Fig. 5 angedeutet bzw. auch aus einer Zusammenschau der Fig. 1, 2, 3 und 5 ohne weiteres ersichtlich, beispielsweise auch mittels zweier Versorgungsanschlüssen V_{CC}, GND nämlichen Sendeempfängers RS485 gebildet sein. Zum Stabilisieren und/oder Einstellen eines Spannungsniveau der am vorbezeichneten Versorgungsterminal anliegenden Betriebsspannung kann die Schnittstellenschaltung IF, wie auch in Fig. 5 schematisch dargestellt, ferner einen, beispielsweise auch galvanisch getrennten, Gleichspannungswandler DC/DC mit einem Wandlereingang und mit einem Wandlerausgang aufweisen, wobei der Gleichspannungswandler DC/DC eingerichtet ist, eine am Wandlereingang anliegende Eingangsgleichspannung - hier nämlich die vorbezeichnete am Versorgungsterminal der Schnittstellenschaltung IF anliegende Betriebsspannung - in eine am Wandlerausgang anliegende - hier als interne Betriebsspannung der Schnittstellenschaltung IF dienliche - Ausgangsgleichspannung mit einer von einer Spannungshöhe der Eingangsgleichspannung abweichenden Spannungshöhe zu konvertieren. Der Gleichspannungswandler DC/DC kann beispielsweise als ein Sperrwandler *(fly-back converter)* und/oder ein Gegentaktwandler *(push-pull converter)* ausgebildet sein.

Nach einer weiteren Ausgestaltung der Erfindung ist in der Schnittstellenschaltung IF ferner ein elektronischer Hauptschalter HS vorgesehen und ist zudem der Steuereingang IF_sw1 der Schnittstellenschaltung IF mittels des Hauptschalters HS bzw. einer Steuerelektrode davon gebildet. Der Hauptschalter HS kann beispielsweise mittels eines Halbleiterrelais *(solid state relais)* oder mittels eines Isolierschicht-Feldeffekttransistors (IGFET), beispielsweise einem n-Kanal-MOSFET (NMOS) oder einem anderen

Metall-Oxid-Halbleiter-Feldeffekttransistor (MOSFET), gebildet sein. Wie in Fig. 5 angedeutet, kann beispielsweise das vorbezeichnete Versorgungsterminal V_{CC}, GND der Schnittstellenschaltung IF mittels des Hauptschalters HS gebildet sein. Der Hauptschalter HS der Schnittstellenschaltung IF ist im besonderen auch dafür eingerichtet, die von der vorbezeichneten Versorgungsschaltung NRG am Versorgungsterminal U2 bereitgestellte Betriebsspannung lediglich dann vom Versorgungsterminal der Schnittstellenschaltung IF an weitere Komponenten der Schnittstellenschaltung IF, beispielsweise den ggf. vorgesehenen Gleichspannungswandler DC/DC und/oder den ggf. vorgesehenen Sendeempfänger RS485, durchzuschalten, falls am Steuereingang IF_sw1 der Schnittstellenschaltung IF die deren zweiten Betriebsmodus IF_{II} aktivierende Anweisung und/oder falls am vorbezeichneten Steuereingang IF_sw2 bzw. sowohl am Steuereingang IF_sw2 als auch Steuereingang IF_sw1 der Schnittstellenschaltung IF die deren dritten Betriebsmodus IF_{III} aktivierende Anweisung anliegt.

Für den vorbezeichneten Fall, daß die Schnittstellenschaltung IF den Gleichspannungswandler DC/DC aufweist, kann der Wandlereingang nämlichen Gleichspannungswandlers DC/DC mit dem elektronischen Hauptschalter HS elektrisch verbunden sein, beispielsweise nämlich derart, daß bei leitend geschaltetem elektronischen Hauptschalter HS am Wandlereingang die von der Versorgungsschaltung NRG bereitgestellte Betriebsspannung für die Schnittstellenschaltung IF als Eingangsspannung des Gleichspannungswandlers anliegt.

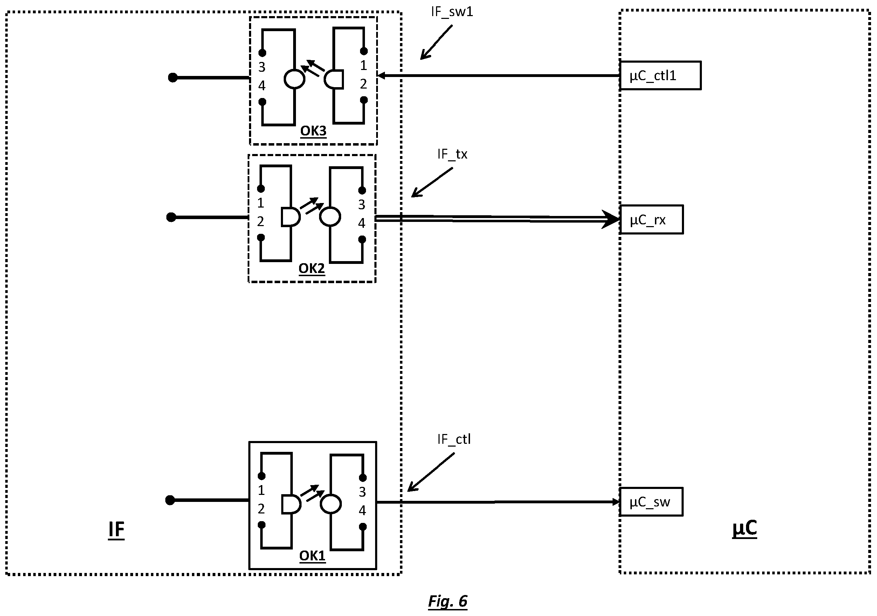

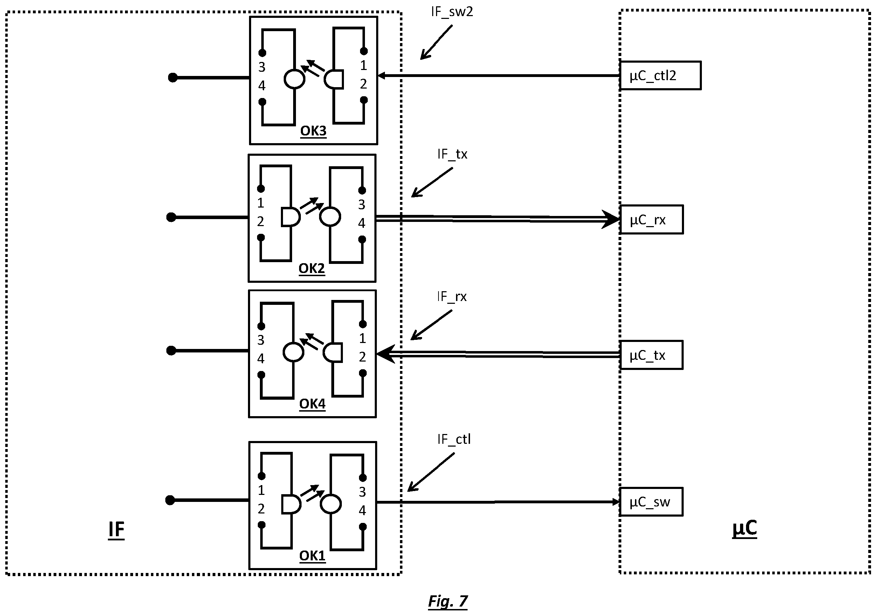

Nach einer weiteren Ausgestaltung der Erfindung weist die Schnittstellenschaltung IF wenigstens einen ersten Optokoppler OK1 mit einem optischen Sendeelement und einem optischen Empfängerelement auf. Wie in Fig. 6 schematisch dargestellt, ist insbesondere der Steuerausgang IF_ctl der Schnittstellenschaltung IF mittels nämlichen Optokopplers OK1 gebildet, indem dessen optisches Empfängerelement mit dem Steuereingang µC_sw des Mikrocontrollers µC elektrisch verbunden ist. Darüber hinaus ist ferner vorgesehen, daß die Schnittstellenschaltung IF zudem einen, beispielsweise Optokoppler OK1 baugleichen, zweiten Optokoppler OK2 mit einem optischen Sendeelement und einem optischen Empfängerelement aufweist, und daß der Signalausgang IF_tx der Schnittstellenschaltung IF mittels des Optokopplers OK2 gebildet ist, indem dessen optisches Empfängerelement, wie in Fig. 6 angedeutet, mit dem Signaleingang µC_rx des Mikrocontrollers µC elektrisch verbunden ist. Nach einer Weiterbildung der Erfindung weist die Schnittstellenschaltung IF ferner einen, beispielsweise zum vorbezeichneten Optokoppler OK1 und/oder zum vorbezeichneten Optokoppler OK2 baugleichen, dritten Optokoppler OK3 mit einem optischen Sendeelement und einem optischen Empfängerelement auf. Nicht zuletzt für den vorbezeichneten Fall, daß die Schnittstellenschaltung IF eingerichtet ist, die im Betrieb benötigte elektrische Leistung vollständig bzw. ausschließlich, aus dem am Anschlußterminal IF_ext1 anliegenden Eingangssignal e1 zu beziehen (Passivkomponente) ist zudem vorgesehen, daß der Steuereingang IF_sw1 der Schnittstellenschaltung IF mittels nämlichen Optokopplers OK3 gebildet ist, derart, daß, wie auch in Fig. 6 angedeutet, dessen optisches Empfängerelement mit dem Steuerausgang µC_ctl1 des Mikrocontrollers µC elektrisch verbunden ist. Durch die Verwendung der Optokoppler OK1, OK2 und OK3 zur Bildung des Steuerausgangs IF_ctl, des Signalausgangs IF_tx sowie des Steuereingangs IF_sw1 können Mikrocontroller µC und Schnittstellenschaltung IF in vorteilhafter Weise voneinander vollständig galvanisch getrennt betrieben und damit einhergehend auch eine vollständige galvanische Trennung des Mikrocontrollers µC sowie weiterer, nicht zur Schnittstellenschaltung IF gehöriger Komponenten der Elektronik von an die Schnittstellenschaltung angeschlossenen, externen elektrischen Schaltungen, beispielsweise dem vorbezeichneten Signalgeber NLU, herbeigeführt werden. Für den anderen vorbezeichneten Fall, daß die Schnittstellenschaltung auch den zweiten Steuereingang IF_sw2 aufweist, ist nach einer anderen Ausgestaltung der Erfindung nämlicher Steuereingang IF_sw2 mittels des vorbezeichneten Optokopplers OK3 gebildet, derart, daß, wie auch in Fig. 7 dargestellt, dessen optisches Sendeelement mit dem Steuerausgang µC_ctl2 des Mikrocontrollers µC elektrisch verbunden ist. Zudem ist für diesen Fall ferner vorgesehen, daß die Schnittstellenschaltung IF zudem auch einen vierten Optokoppler OK4 mit einem optischen Sendeelement und einem optischen Empfängerelement aufweist, und daß der Signaleingang IF_rx der Schnittstellenschaltung IF mittels des Optokopplers OK4 gebildet ist, derart daß dessen optisches Sendeelement mit dem Signalausgang µC_tx des Mikrocontrollers µC elektrisch verbunden ist. Im Ergebnis kann damit auch für den Fall, daß die Schnittstellenschaltung IF an die Versorgungsschaltung NRG elektrisch angeschlossen ist zumindest bei im Betriebsmodus IF_{I} operierender Schnittstellenschaltung IF eine galvanische Trennung zwischen Mikrocontroller µC und Schnittstellenschaltung IF etabliert werden. Für den erwähnten Fall, daß die Versorgungsschaltung NRG einen als Sperrwandler ausgebildeten Gleichspannungswandler DC/DC aufweist, können Mikrocontroller µC und Schnittstellenschaltung IF somit auch bei im Betriebsmodus IF_{II}, ggf. auch bei im Betriebsmodus IF_{III} operierender Schnittstellenschaltung IF voneinander galvanisch getrennt betrieben werden.

## Patentansprüche

1. Elektronik, insb. als Kommunikations-Schnittstelle bzw. Remote-I/O eines Meßsystems ausgebildete und/oder batteriegespeiste, Elektronik, umfassend:
- einen Mikrocontroller (µC)
-- mit einem Steuereingang (µC_sw),
-- mit wenigstens einem ersten Steuerausgang (µC_ctl1)
-- und mit einem Signaleingang (µC_rx);
- sowie eine Schnittstellenschaltung (IF)
-- mit wenigstens einem ersten Anschlußterminal (IF_ext1),
-- mit einem Steuerausgang (IF_ctl),
-- mit einem ersten Steuereingang (IF_sw1)
-- und mit einem Signalausgang (IF_tx);
- wobei der Steuerausgang der Schnittstellenschaltung mit dem Steuereingang des Mikrocontrollers elektrisch verbunden ist;
- wobei der erste Steuerausgang des Mikrocontrollers mit dem ersten Steuereingang der Schnittstellenschaltung elektrisch verbunden ist;
- und wobei der Signalausgang der Schnittstellenschaltung mit dem Signaleingang des Mikrocontrollers elektrisch verbunden ist;
- wobei sowohl der Mikrocontroller als auch die Schnittstellenschaltung jeweils einen ersten Betriebsmodus (µC_{I}; IF_{I}) und jeweils wenigstens einen zweiten Betriebsmodus (µC_{II}; IF_{II}) aufweist;
- wobei der Mikrocontroller eingerichtet ist, im ersten Betriebsmodus (µC_{I}) am ersten Steuerausgang eine Anweisung auszugeben, die die Schnittstellenschaltung veranlaßt, in deren ersten Betriebsmodus zu operieren;
- wobei die Schnittstellenschaltung eingerichtet ist, zumindest im ersten Betriebsmodus (IF_{I}) ein am ersten Anschlußterminal anliegendes Eingangssignal (e1) zu differenzieren, nämlich in ein eine Ableitung des Eingangssignals nach der Zeit repräsentierendes Ableitungssignal (a1) zu konvertieren sowie mittels nämlichen Ableitungssignals (a1) ein binäres Steuersignal zu generieren und am Steuerausgang (IF_ctl) auszugeben;
- wobei der Mikrocontroller eingerichtet ist, im zweiten Betriebsmodus (µC_{II}) am ersten Steuerausgang (µC_ctl1) eine Anweisung auszugeben, die die Schnittstellenschaltung (IF) in deren zweiten Betriebsmodus (IF_{II}) operieren läßt;
- wobei die Schnittstellenschaltung eingerichtet ist, im zweiten Betriebsmodus (IF_{II}) ein am ersten Anschlußterminal (IF_ext1) anliegendes, insb. IEC 61158 CPF15:2007 und/oder EIA-485 konformes, digitales Eingangssignal in ein dieses repräsentierendes binäres erstes Ausgangssignal (sD1) zu wandeln und nämliches erstes Ausgangssignal (sD1) am Signalausgang (IF_tx) auszugeben;
- und wobei der Mikrocontroller (µC) eingerichtet ist, im zweiten Betriebsmodus (µC_{II}) ein am Signaleingang (µC_rx) anliegendes, insb. UART konformes, digitales Eingangssignal zu empfangen und zu verarbeiten, insb. nämlich eine im Eingangssignal enthaltenen Anweisung auszuführen und/oder eine im Eingangssignal enthaltene Nachricht auszuwerten.

2. Elektronik nach dem vorherigen Anspruch,
- wobei die Schnittstellenschaltung eingerichtet ist, im ersten Betriebsmodus ein am ersten Anschlußterminal anliegendes digitales Eingangssignal nicht in ein dieses repräsentierendes Ausgangssignal zu wandeln bzw. kein ein am ersten Anschlußterminal anliegendes digitales Eingangssignal repräsentierendes Ausgangssignal am Signalausgang auszugeben; und/oder
- wobei der Mikrocontroller eingerichtet ist, im ersten Betriebsmodus (µC_{I}) das am Steuereingang (µC_sw) anliegende Steuersignal der Schnittstellenschaltung zu verarbeiten, insb. nämlich auf die Anweisung (IRQ) mit einem Wechsel in den zweiten Betriebsmodus (µC_{II}) zu reagieren; und/oder
- wobei der Mikrocontroller eingerichtet ist, im ersten Betriebsmodus ein am Signaleingang anliegendes digitales Eingangssignal nicht zu verarbeiten, insb. nämlich auch eine darin enthaltene Anweisung nicht auszuführen; und/oder
- wobei der Mikrocontroller eingerichtet ist, zeitgesteuert vom zweiten Betriebsmodus in den ersten Betriebsmodus zu wechseln, insb. falls kein digitales und/oder UART konformes Eingangssignal am Signaleingang anliegt; und/oder
- wobei die Schnittstellenschaltung und der Mikrocontroller eingerichtet sind, zeitgleich im jeweiligen zweiten Betriebsmodus zu operieren, derart, daß das erste Ausgangssignal am Signalausgang der Schnittstellenschaltung das am Signaleingang des Mikrocontrollers anliegende digitale Eingangssignal bildet und daß der Mikrocontroller nämliches erstes Ausgangssignal empfängt und verarbeitet; und/oder
- wobei die Schnittstellenschaltung eingerichtet ist, auf eine, insb. eine auf den nominell zu erreichenden Logikpegels normierte Änderungsgeschwindigkeit von mehr als 90%/µs aufweisende, Änderung eines Logikpegels eines, insb. IEC 61158 CPF15:2007 und/oder EIA-485 konformen, digitalen Eingangssignals und/oder auf eine Flankensteilheit von mehr als 1 V/µs aufweisende Signalflanke eines binären Eingangssignals mit der Kodierung einer Anweisung (IRQ) in das Steuersignal zu reagieren, die den Mikrocontroller (µC) in dessen zweiten Betriebsmodus (µC_{II}) operieren läßt bzw. die den Mikrocontroller veranlaßt, von dessen ersten Betriebsmodus in dessen zweiten Betriebsmodus zu wechseln; und/oder
- wobei der Signaleingang (µC_rx) als eine asynchrone serielle Schnittstelle (UART) oder als Schalteingang ausgebildet ist.

3. Elektronik nach einem der vorherigen Ansprüche,
- wobei der Mikrocontroller (µC) einen, insb. als eine asynchrone serielle Schnittstelle (UART) ausgebildeten, Signalausgang (µC_tx) und die Schnittstellenschaltung (IF) einen, insb. als eine asynchrone serielle Schnittstelle (UART) ausgebildeten, Signaleingang (IF_rx) aufweist;
- und wobei der Signalausgang (µC_tx) des Mikrocontrollers mit dem Signaleingang der Schnittstelle elektrisch verbunden ist.

4. Elektronik nach dem vorherigen Anspruch,
- wobei sowohl der Mikrocontroller als auch die die Schnittstellenschaltung jeweils wenigstens einen dritten Betriebsmodus (µC_{III}; IF_{III}) aufweist;
- wobei der Mikrocontroller (µC) eingerichtet ist, im dritten Betriebsmodus am Signalausgang (µC_tx) ein, insb. UART konformes, digitales zweites Ausgangssignal (sD2) auszugeben;
- wobei die Schnittstellenschaltung (IF) eingerichtet ist, im dritten Betriebsmodus (IF_{III}) ein am Signaleingang (IF_rx) anliegendes, insb. UART konformes, digitales Eingangssignal in ein, insb. IEC 61158 CPF15:2007 und/oder EIA-485 konformes, digitales drittes Ausgangssignal (sD3) zu wandeln;
- und wobei die Schnittstellenschaltung und der Mikrocontroller eingerichtet sind, zeitgleich im jeweiligen dritten Betriebsmodus (µC_{III}; IF_{III}) zu operieren, derart, daß das zweite Ausgangssignal (sD2) am Signalausgang (µC_tx) des Mikrocontrollers das am Signaleingang (IF_rx) der Schnittstellenschaltung anliegende digitale Eingangssignal bildet und daß die Schnittstellenschaltung nämliches zweites Ausgangssignal (sD2) empfängt und verarbeitet, insb. nämlich in das dritte Ausgangssignal (sD3) wandelt.

5. Elektronik nach Anspruch 4,
- wobei die Schnittstellenschaltung ein zweites Anschlußterminal (IF_ext2) aufweist und eingerichtet ist, im dritten Betriebsmodus das dritte Ausgangssignal (sD3) an nämlichem zweiten Anschlußterminal auszugeben, insb. nämlich sowohl im ersten Betriebsmodus als auch im zweiten Betriebsmodus ein am Signaleingang anliegendes Eingangssignal nicht in ein dieses repräsentierendes Ausgangssignal zu wandeln bzw. kein ein am Signaleingang anliegendes Eingangssignal repräsentierendes Ausgangssignal am zweiten Anschlußterminal auszugeben; und/oder
- wobei die Schnittstellenschaltung eingerichtet ist, im dritten Betriebsmodus das dritte Ausgangssignal am ersten Anschlußterminal auszugeben; und/oder
- wobei der Mikrocontroller eingerichtet ist, gesteuert durch das Eingangssignal (sD1) am Signaleingang (µC_rx) vom zweiten in den dritten Betriebsmodus zu wechseln; und/oder
- wobei der Mikrocontroller eingerichtet ist, nach der Ausgabe des digitalen Ausgangssignals (sD2) am Signalausgang (µC_tx) selbststätig vom dritten Betriebsmodus in den ersten Betriebsmodus zu wechseln; und/oder
- wobei die Schnittstellenschaltung eingerichtet ist, sowohl im ersten Betriebsmodus als auch im zweiten Betriebsmodus ein am Signaleingang (IF_rx) anliegendes Eingangssignal nicht in ein dieses repräsentierendes Ausgangssignal zu wandeln bzw. kein ein am Signaleingang anliegendes Eingangssignal repräsentierendes Ausgangssignal am ersten Anschlußterminal (IF_ext1) auszugeben; und/oder
- wobei der Mikrocontroller eingerichtet ist, im dritten Betriebsmodus ein am Signaleingang (µC_rx) anliegendes digitales Eingangssignal nicht zu verarbeiten, insb. nämlich auch keine am Signaleingang (µC_rx) eingehende Anweisung auszuführen; und/oder
- wobei die Schnittstellenschaltung einen, insb. IEC 61158 CPF15:2007 und/oder EIA-485 kompatiblen und/oder monolithischen, Sendeempfänger (RS485), insb. vom Typ SN65HVD1781 von Texas Instruments Inc. 2019 oder vom Typ THVD2450 von Texas Instruments Inc. 2019, aufweist und das erste Anschlußterminal der Schnittstellenschaltung mittels wenigstens eines von BUS-Treiber/Empfänger-Anschlüsse des Sendeempfängers (A, B), der Signalausgang (IF_tx) der Schnittstellenschaltung mittels eines Digitalausgangs (R) des Sendeempfängers und der Signaleingang (IF_rx) der Schnittstellenschaltung mittels eines Digitaleingangs (D) des Sendeempfängers gebildet ist.

6. Elektronik nach einem der Ansprüche 4 bis 5,
- wobei der Mikrocontroller einen zweiten Steuerausgang (µC_ctl2) und die Schnittstellenschaltung eine zweiten Steuereingang (IF_sw2) aufweist;
- und wobei der zweite Steuerausgang des Mikrocontrollers mit dem zweiten Steuereingang der Schnittstellenschaltung elektrisch verbunden ist.

7. Elektronik nach dem vorherigen Anspruch, wobei der Mikrocontroller eingerichtet ist, im dritten Betriebsmodus am zweiten Steuerausgang eine Anweisung auszugeben, die die Schnittstellenschaltung veranlaßt, in deren dritten Betriebsmodus zu operieren.

8. Elektronik nach einem der Ansprüche 1 bis 3, wobei die Schnittstellenschaltung eingerichtet ist, sowohl die im ersten Betriebsmodus als auch die im zweiten Betriebsmodus benötigte elektrische Leistung jeweils ausschließlich aus dem am ersten Anschlußterminal anliegenden Eingangssignal (e1) zu beziehen.

9. Elektronik nach einem der vorherigen Ansprüche, weiters umfassend:
- eine, insb. mittels eines elektrochemischen und/oder wiederaufladbaren Energiespeichers gebildete, Versorgungsschaltung (NRG),
- wobei die Versorgungsschaltung (NRG) wenigstens einen ersten Versorgungsterminal (U1) aufweist und eingerichtet ist, am ersten Versorgungsterminal eine Betriebsspannung für den Mikrocontroller bereitzustellen;
- und wobei der Mikrocontroller einen Versorgungsterminal aufweist, der mit dem ersten Versorgungsterminal (U1) der Versorgungsschaltung (NRG) elektrisch verbunden ist.

10. Elektronik nach dem vorherigen Anspruch,
- wobei die Versorgungsschaltung (NRG) einen zweiten Versorgungsterminal (U2) aufweist und eingerichtet ist, am zweiten Versorgungsterminal eine Betriebsspannung für die Schnittstellenschaltung bereitzustellen;
- und wobei die Schnittstellenschaltung einen Versorgungsterminal aufweist, der mit dem zweiten Versorgungsterminal der Versorgungsschaltung (NRG) elektrisch verbunden ist.

11. Elektronik nach Anspruch 9 oder 10, wobei die Schnittstellenschaltung einen, insb. mittels eines Halbleiterrelais oder mittels eines Isolierschicht-Feldeffekttransistors gebildeten, elektronischen Hauptschalter (HS) aufweist, wobei sowohl der erste Steuereingang (IF_sw1) der Schnittstellenschaltung als auch der Versorgungsterminal (V_{CC}, GND) der Schnittstellenschaltung (IF) mittels des Hauptschalters (HS) gebildet ist.

12. Elektronik nach einem der vorherigen Ansprüche,
- wobei die Schnittstellenschaltung einen, insb. galvanisch getrennten, Gleichspannungswandler (DC/DC) mit einem Wandlereingang und mit einem Wandlerausgang, insb. einen Sperrwandler oder einen Gegentaktwandler, aufweist, wobei der Gleichspannungswandler eingerichtet ist, eine am Wandlereingang anliegende Eingangsgleichspannung in eine am Wandlerausgang anliegende Ausgangsgleichspannung mit einer von einer Spannungshöhe der Eingangsgleichspannung abweichenden Spannungshöhe zu konvertieren; und/oder
- wobei die Schnittstellenschaltung ein, insb. passives, Signalfilter, insb. ein Hochpaßfilter, aufweist; und/oder
- wobei die Schnittstellenschaltung zum Differenzieren des am ersten Anschlußterminal (IF_ext1) anliegenden Eingangssignals ein, insb. passives und/oder eine Grenzfrequenz von mehr als 800 Hz aufweisendes, Hochpaßfilter aufweist; und/oder
- wobei die Schnittstellenschaltung eingerichtet ist, im Betrieb benötigte elektrische Leistung (Hilfsenergie) zumindest zeitweise und/oder zumindest anteilig aus dem am ersten Anschlußterminal anliegenden Eingangssignal (e1) zu beziehen, insb. nämlich im ersten Betriebsmodus benötigte elektrische Leistung ausschließlich aus dem am ersten Anschlußterminal anliegenden Eingangssignal (e1) zu beziehen; und/oder
- wobei die Schnittstellenschaltung im ersten Betriebsmodus ein Leistungsbedarf aufweist, der weniger als 50 mW beträgt; und/oder
- wobei die Schnittstellenschaltung im zweiten Betriebsmodus ein Leistungsbedarf aufweist, der höher ist als ein Leistungsbedarf, den die Schnittstellenschaltung im ersten Betriebsmodus aufweist, insb. nämlich mehr als 300% des Leistungsbedarfs der Schnittstellenschaltung im ersten Betriebsmodus und/oder mehr als 150 mW beträgt.

13. Elektronik nach einem der vorherigen Ansprüche, wobei die Schnittstellenschaltung einen ersten Optokoppler (OK1) mit einem optischen Sendeelement und einem optischen Empfängerelement aufweist, wobei der Steuerausgang der Schnittstellenschaltung mittels des ersten Optokopplers gebildet ist, derart, daß dessen optisches Empfängerelement mit dem Steuereingang des Mikrocontrollers elektrisch verbunden ist.

14. Elektronik nach dem vorherigen Anspruch, wobei die Schnittstellenschaltung einen zweiten Optokoppler (OK2) mit einem optischen Sendeelement und einem optischen Empfängerelement aufweist, wobei der Signalausgang der Schnittstellenschaltung mittels des zweiten Optokopplers gebildet ist, derart, daß dessen optisches Empfängerelement mit dem Signaleingang des Mikrocontrollers elektrisch verbunden ist.

15. Elektronik nach dem vorherigen Anspruch, wobei die Schnittstellenschaltung einen dritten Optokoppler (OK3) mit einem optischen Sendeelement und einem optischen Empfängerelement aufweist, insb. derart, daß der erste Steuereingang der Schnittstellenschaltung mittels des dritten Optokopplers gebildet ist, derart, daß dessen optisches Empfängerelement mit dem ersten Steuerausgang des Mikrocontrollers elektrisch verbunden ist.

16. Elektronik nach dem vorherigen Anspruch und einem der Ansprüche 6 bis 7, wobei der zweite Steuereingang der Schnittstellenschaltung mittels des dritten Optokopplers gebildet ist, derart, daß dessen optisches Sendeelement mit dem zweiten Steuerausgang des Mikrocontrollers elektrisch verbunden ist.

17. Elektronik nach dem vorherigen Anspruch, wobei die Schnittstellenschaltung einen vierten Optokoppler (OK4) mit einem optischen Sendeelement und einem optischen Empfängerelement aufweist, wobei der Signaleingang der Schnittstellenschaltung mittels des vierten Optokopplers gebildet ist, derart daß dessen optisches Sendeelement mit dem Signalausgang des Mikrocontrollers elektrisch verbunden ist.

18. Kommunikationssystem, umfassend:
- eine Elektronik gemäß einem der Ansprüche 1 bis 17;
- sowie einen mit der Elektronik elektrisch verbundenen Signalgeber (NLU);
- wobei der Signalgeber (NLU) eingerichtet ist, ein, insb. IEC 61158 CPF15:2007 konformes, Digitalsignal an die Elektronik zu senden.

19. Meßsystem, umfassend:
- eine Elektronik gemäß einem der Ansprüche 1 bis 17;
- sowie einen mit der Elektronik elektrisch gekoppelten Sensor, wobei der Mikrocontroller eingerichtet ist, zumindest im ersten Betriebsmodus ein mittels des Sensors generiertes Sensorsignal zu empfangen und auszuwerten, insb. nämlich Meßwerte für wenigstens eine mittels des Sensors erfaßte Meßgröße zu ermitteln.

## Claims

1. Electronics, in particular configured as a communication interface or remote I/O of a measuring system, and/or battery-powered electronics, comprising:
- A microcontroller (µC)
-- with a control input (µC_sw),
-- with at least one first control output (µC_ctl1)
-- and with a signal input (µC_rx);
- and an interface circuit (IF)
-- with at least one first connection terminal (IF_ext1),
-- with a control output (IF_ctl),
-- with a first control input (IF_sw1)
-- and with a signal output (IF_tx);
- wherein the control output of the interface circuit is electrically connected to the control input of the microcontroller;
- wherein the first control output of the microcontroller is electrically connected to the first control input of the interface circuit;
- and wherein the signal output of the interface circuit is electrically connected to the signal input of the microcontroller;
- wherein the microcontroller and the interface circuit each have one first operating mode (µC_{I}; IF₁) and at least one second operating mode (µCl_{I}; IFI_{I});
- wherein the microcontroller is configured to issue an instruction at the first control output in the first operating mode (µC_{I}), which causes the interface circuit to operate in its first operating mode;
- wherein the interface circuit is configured, at least in the first operating mode (IF_{I}), to differentiate an input signal (e1) present at the first connection terminal, that is to say to convert it into a differentiated signal (a1) representing a differentiation of the input signal over time, and to generate a binary control signal using said differentiated signal (a1) and output it at the control output (IF_ctl);
- wherein the microcontroller is configured to issue an instruction at the first control output (µC_ctl1) in the second operating mode (µC_{II}), which causes the interface circuit (IF) to operate in its second operating mode (IF_{II});
- wherein the interface circuit is configured, in the second operating mode (IF_{II}), to convert an, in particular IEC 61 158 CPF15:2007-compliant and/or EIA-485-compliant, digital input signal present at the first connection terminal (IF_ext1) into a binary first output signal (sD1) representing this, and to output said first output signal (sD1) at the signal output (IF_tx);
- and wherein the microcontroller (µC) is configured, in the second operating mode (µC_{II}), to receive an, in particular UART-compliant, digital input signal present at the signal input (µC_rx), and to process it, that is to say, in particular, to implement an instruction contained in the input signal and/or to analyze a message contained in the input signal.

2. The electronics as claimed in the preceding claim,
- wherein the interface circuit is configured, in the first operating mode, not to convert a digital input signal present at the first connection terminal into an output signal representing this, and not to output at the signal output an output signal representing a digital input signal present at the first connection terminal; and/or
- wherein the microcontroller is configured, in the first operating mode (µC_{I}), to process the control signal of the interface circuit present at the control input (µC_sw), that is to say, in particular, to react to the instruction (IRQ) by switching to the second operating mode (µC_{II}); and/or
- wherein the microcontroller is configured, in the first operating mode, not to process a digital input signal present at the signal input, that is to say, in particular, not to implement an instruction it contains; and/or
- wherein the microcontroller is configured to switch from the second operating mode to the first operating mode in a time-controlled manner, in particular if there is no digital and/or UART-compliant input signal present at the signal input; and/or
- wherein the interface circuit and the microcontroller are configured to operate simultaneously in their respective second operating mode in such a way that the first output signal at the signal output of the interface circuit forms the digital input signal present at the signal input of the microcontroller, and in such a way that the microcontroller receives and processes said first output signal; and/or
- wherein the interface circuit is configured to respond to a change in a logic level of an, in particular IEC 61158 CPF15:2007-compliant and/or EIA-485-compliant, digital input signal, in particular having a rate of change of more than 90%/µs standardized to the logic level nominally to be reached, and/or to a signal edge of a binary input signal having an edge steepness of more than 1 V/µs, by coding an instruction (IRQ) into the control signal, which causes the microcontroller (PC) to operate in its second operating mode (PC") or causes the microcontroller to switch from its first operating mode to its second operating mode; and/or
- wherein the signal input (µC_rx) is configured as an asynchronous serial interface (UART) or as a switching input.

3. The electronics as claimed in one of the preceding claims,
- wherein the microcontroller (µC) has a signal output (µC_tx), in particular configured as an asynchronous serial interface (UART), and the interface circuit (IF) has a signal input (IF_rx), in particular configured as an asynchronous serial interface (UART);
- and wherein the signal output (µC_tx) of the microcontroller is electrically connected to the signal input of the interface.

4. The electronics as claimed in the preceding claim,
- wherein the microcontroller and the interface circuit each have at least one third operating mode (µC_{III}; IF_{III});
- wherein the microcontroller (µC) is configured to output an, in particular UART-compliant, digital second output signal (sD2) at the signal output (µC_tx) in the third operating mode;
- wherein the interface circuit (IF) is configured, in the third operating mode (IF_{III}), to convert an, in particular UART-compliant, digital input signal present at the signal input (IF_rx) into an, in particular IEC 61158 CPF15:2007-compliant and/or EIA-485-compliant, digital third output signal (sD3);
- and wherein the interface circuit and the microcontroller are configured to operate simultaneously in their respective third operating mode (µC_{III}; IF_{III}) in such a way that the second output signal (sD2) at the signal output (µC_tx) of the microcontroller forms the digital input signal present at the signal input (IF_rx) of the interface circuit, and in such a way that the interface circuit receives and processes said second output signal (sD2), that is to say, in particular, converts it into the third output signal (sD3).

5. The electronics as claimed in claim 4,
- wherein the interface circuit has a second connection terminal (IF_ext2) and is configured, in the third operating mode, to output the third output signal (sD3) to said second connection terminal, that is to say, in particular, neither in the first operating mode nor in the second operating mode, not to convert an input signal present at the signal input into an output signal representing this, and not to output at the second connection terminal an output signal representing an input signal present at the signal input; and/or
- wherein the interface circuit is configured to output the third output signal at the first connection terminal in the third operating mode; and/or
- wherein the microcontroller is configured to switch from the second operating mode to the third operating mode, controlled by the input signal (sD1) at the signal input (µC_rx); and/or
- wherein the microcontroller is configured to switch independently from the third operating mode to the first operating mode after the digital output signal (sD2) is output at the signal output (µC_tx); and/or
- wherein the interface circuit is configured, neither in the first operating mode nor in the second operating mode, not to convert an input signal present at the signal input (IF_rx) into an output signal representing this, and not to output at the first connection terminal (IF_ext1) an output signal representing an input signal present at the signal input; and/or
- wherein the microcontroller is configured, in the third operating mode, not to process a digital input signal present at the signal input (µC_rx), that is to say, in particular, not to implement an instruction received at the signal input (µC_rx); and/or
- wherein the interface circuit has an, in particular IEC 61158 CPF15:2007-compatible and/or EIA-485-compatible and/or monolithic, transceiver (RS485), in particular of type SN65HVD1781 from Texas Instruments Inc. 2019 or of type THVD2450 from Texas Instruments Inc. 2019, and the first connection terminal of the interface circuit is formed by means of at least one of the BUS driver/receiver connections of the transceiver (A, B), the signal output (IF_tx) of the interface circuit is formed by means of a digital output (R) of the transceiver, and the signal input (IF_rx) of the interface circuit is formed by means of a digital input (D) of the transceiver.

6. The electronics as claimed in either of claims 4 or 5,
- wherein the microcontroller has a second control output (µC_ctl2), and the interface circuit has a second control input (IF_sw2);
- and wherein the second control output of the microcontroller is electrically connected to the second control input of the interface circuit.

7. The electronics as claimed in the preceding claim, wherein the microcontroller is configured to issue an instruction at the second control output in the third operating mode, which causes the interface circuit to operate in its third operating mode.

8. The electronics as claimed in one of claims 1 to 3, wherein the interface circuit is configured to obtain the electrical power required both in the first operating mode and in the second operating mode in each case exclusively from the input signal (e1) present at the first connection terminal.

9. The electronics as claimed in one of the preceding claims, further comprising:
- A supply circuit (NRG), in particular formed by means of an electrochemical and/or rechargeable energy storage unit,
- wherein the supply circuit (NRG) has at least one first supply terminal (U1) and is configured to supply an operating voltage for the microcontroller at the first supply terminal;
- and wherein the microcontroller has a supply terminal which is electrically connected to the first supply terminal (U1) of the supply circuit (NRG).

10. The electronics as claimed in the preceding claim,
- wherein the supply circuit (NRG) has a second supply terminal (U2) and is configured to supply an operating voltage for the interface circuit at the second supply terminal;
- and wherein the interface circuit has a supply terminal which is electrically connected to the second supply terminal of the supply circuit (NRG).

11. The electronics as claimed in claim 9 or 10, wherein the interface circuit has an electronic main switch (HS), in particular formed by means of a semiconductor relay or by means of an insulated-gate field-effect transistor, wherein both the first control input (IF_sw1) of the interface circuit and the supply terminal (V_{CC}, GND) of the interface circuit (IF) are formed by means of the main switch (HS).

12. The electronics as claimed in one of the preceding claims,
- wherein the interface circuit has an, in particular galvanically isolated, DC-to-DC converter (DC/DC) with a converter input and with a converter output, in particular a flyback converter or a push-pull converter, wherein the DC-to-DC converter is configured to convert a DC input voltage present at the converter input into a DC output voltage present at the converter output with a voltage level that differs from a voltage level of the DC input voltage; and/or
- wherein the interface circuit has an, in particular passive, signal filter, in particular a high-pass filter; and/or
- wherein the interface circuit for differentiating the input signal present at the first connection terminal (IF_ext1) has a high-pass filter, in particular a passive one and/or one with a limit frequency of more than 800 Hz; and/or
- wherein the interface circuit is configured to obtain electrical power (auxiliary power) required during operation at least at times and/or at least in part from the input signal (e1) present at the first connection terminal, that is to say, in particular, to obtain electrical power required in the first operating mode exclusively from the input signal (e1) present at the first connection terminal; and/or
- wherein the interface circuit has a power demand of less than 50 mW in the first operating mode; and/or
- wherein the interface circuit in the second operating mode has a power demand which is higher than a power demand that the interface circuit has in the first operating mode, that is to say, in particular, is more than 300% of the power demand of the interface circuit in the first operating mode and/or is more than 150 mW.

13. The electronics as claimed in one of the preceding claims, wherein the interface circuit has a first optocoupler (OK1) with an optical transmitter element and an optical receiver element, wherein the control output of the interface circuit is formed by means of the first optocoupler in such a way that its optical receiver element is electrically connected to the control input of the microcontroller.

14. The electronics as claimed in the preceding claim, wherein the interface circuit has a second optocoupler (OK2) with an optical transmitter element and an optical receiver element, wherein the signal output of the interface circuit is formed by means of the second optocoupler in such a way that its optical receiver element is electrically connected to the signal input of the microcontroller.

15. The electronics as claimed in the preceding claim, wherein the interface circuit has a third optocoupler (OK3) with an optical transmitter element and an optical receiver element, in particular in such a way that the first control input of the interface circuit is formed by means of the third optocoupler in such a way that its optical receiver element is electrically connected to the first control output of the microcontroller.

16. The electronics as claimed in the preceding claim and either of claims 6 or 7, wherein the second control input of the interface circuit is formed by means of the third optocoupler in such a way that its optical transmitter element is electrically connected to the second control output of the microcontroller.

17. The electronics as claimed in the preceding claim, wherein the interface circuit has a fourth optocoupler (OK4) with an optical transmitter element and an optical receiver element, wherein the signal input of the interface circuit is formed by means of the fourth optocoupler in such a way that its optical transmitter element is electrically connected to the signal output of the microcontroller.

18. A communication system, comprising:
- Electronics as claimed in one of claims 1 to 17;
- and a transducer (NLU) electrically connected to the electronics;
- wherein the transducer (NLU) is configured to send an, in particular IEC 61158 CPF15:2007-compliant, digital signal to the electronics.

19. A measuring system, comprising:
- Electronics as claimed in one of claims 1 to 17;
- and a sensor electrically connected to the electronics, wherein the microcontroller is configured to receive and analyze a sensor signal generated by the sensor, at least in the first operating mode, that is to say, in particular, to determine measured values for at least one measured variable recorded by the sensor.

## Revendications

1. Électronique, notamment conçue en tant qu'interface de communication ou E/S à distance d'un système de mesure et/ou alimentée par batterie, laquelle électronique comprend :
- un microcontrôleur (µC)
-- avec une entrée de commande (µC_sw),
-- avec au moins une première sortie de commande (µC_ctl1)
-- et avec une entrée de signal (µC_rx) ;
- ainsi qu'un circuit d'interface (IF)
-- avec au moins une première borne de raccordement (IF_ext1),
-- avec une sortie de commande (IF_ctl),
-- avec une première entrée de commande (IF_sw1)
-- et avec une sortie de signal (IF_tx) ;
- la sortie de commande du circuit d'interface étant reliée électriquement à l'entrée de commande du microcontrôleur ;
- la première sortie de commande du microcontrôleur étant reliée électriquement à la première entrée de commande du circuit d'interface ;
- et la sortie de signal du circuit d'interface étant reliée électriquement à l'entrée de signal du microcontrôleur ;
- le microcontrôleur et le circuit d'interface présentant chacun un premier mode de fonctionnement (µC_{I} ; IF₁) et au moins un deuxième mode de fonctionnement (µC_{II} ; IF_{II}) ;
- le microcontrôleur étant conçu pour émettre, dans le premier mode de fonctionnement (µC_{I}), une instruction à la première sortie de commande qui amène le circuit d'interface à fonctionner dans son premier mode de fonctionnement ;
- le circuit d'interface étant conçu pour différencier, au moins dans le premier mode de fonctionnement (IF_{I}), un signal d'entrée (e1) présent sur la première borne de raccordement, à savoir pour le convertir en un signal dérivé (a1) représentant une dérivée du signal d'entrée en fonction du temps, et générer un signal de commande binaire à l'aide dudit signal dérivé (a1) et l'émettre à la sortie de commande (IF_ctl) ;
- le microcontrôleur étant conçu pour émettre, dans le deuxième mode de fonctionnement (µC_{II}), une instruction à la première sortie de commande (µC_ctl1) qui fait fonctionner le circuit d'interface (IF) dans son deuxième mode de fonctionnement (IF_{II}) ;
- le circuit d'interface étant conçu, dans le deuxième mode de fonctionnement (IF_{II}), pour convertir un signal d'entrée numérique présent sur la première borne de raccordement (IF_ext1), lequel signal est notamment conforme à la norme IEC 61158 CPF15:2007 et/ou EIA-485, en un premier signal de sortie binaire (sD1) représentant ledit signal d'entrée et pour délivrer ledit premier signal de sortie (sD1) à la sortie de signal (IF_tx) ;
- et le microcontrôleur (µC) étant configuré pour recevoir et traiter, dans le deuxième mode de fonctionnement (µC_{II}), un signal d'entrée numérique présent à l'entrée de signal (µC_rx), lequel signal est notamment conforme à la norme UART, notamment pour exécuter une instruction contenue dans le signal d'entrée et/ou pour évaluer un message contenu dans le signal d'entrée.

2. Électronique selon la revendication précédente,
- pour laquelle le circuit d'interface est configuré, dans le premier mode de fonctionnement, pour ne pas convertir un signal d'entrée numérique présent sur la première borne de connexion en un signal de sortie le représentant ou pour ne pas émettre à la sortie de signal un signal de sortie représentant un signal d'entrée numérique présent sur la première borne de connexion ; et/ou
- le microcontrôleur étant configuré pour traiter, dans le premier mode de fonctionnement (µC_{I}), le signal de commande du circuit d'interface présent à l'entrée de commande (µC_sw), notamment pour réagir à l'instruction (IRQ) par un passage au deuxième mode de fonctionnement (µC_{II}) ; et/ou
- le microcontrôleur étant conçu pour ne pas traiter, dans le premier mode de fonctionnement, un signal d'entrée numérique présent à l'entrée de signal, notamment pour ne pas exécuter une instruction que ledit microcontrôleur contient ; et/ou
- le microcontrôleur étant conçu pour passer du deuxième mode de fonctionnement au premier mode de fonctionnement de manière temporisée, notamment si aucun signal d'entrée numérique et/ou conforme à la norme UART n'est présent à l'entrée de signal; et/ou
- le circuit d'interface et le microcontrôleur étant conçus pour fonctionner simultanément dans le deuxième mode de fonctionnement respectif, de telle sorte que le premier signal de sortie à la sortie de signal du circuit d'interface forme le signal d'entrée numérique présent à l'entrée de signal du microcontrôleur et que le microcontrôleur reçoive et traite ledit premier signal de sortie ; et/ou
- le circuit d'interface étant conçu pour réagir à une vitesse de variation, notamment une vitesse de variation normalisée au niveau logique nominal à atteindre, supérieure à 90 %/µs, et/ou à une pente de front supérieure à 1 V/µs, avec le codage d'une instruction (IRQ) dans le signal de commande, qui fait fonctionner le microcontrôleur (µC) dans son deuxième mode de fonctionnement (µC_{II}) ou qui amène le microcontrôleur à passer de son premier mode de fonctionnement à son deuxième mode de fonctionnement ; et/ou
- l'entrée de signal (µC_rx) étant conçue comme une interface série asynchrone (UART) ou comme une entrée de commutation.

3. Électronique selon l'une des revendications précédentes,
- pour laquelle le microcontrôleur (µC) comporte une sortie de signal (µC_tx) conçue notamment comme une interface série asynchrone (UART) et le circuit d'interface (IF) comporte une entrée de signal (IF_rx) conçue notamment comme une interface série asynchrone (UART) ; et
- pour laquelle la sortie de signal (µC_tx) du microcontrôleur est reliée électriquement à l'entrée de signal de l'interface.

4. Électronique selon la revendication précédente,
- pour laquelle le microcontrôleur et le circuit d'interface présentent chacun au moins un troisième mode de fonctionnement (µC_{III} ; IF_{III})
- le microcontrôleur (µC) étant conçu pour émettre, dans le troisième mode de fonctionnement, un deuxième signal de sortie numérique (sD2), notamment conforme à la norme UART, à la sortie de signal (µC_tx) ;
- le circuit d'interface (IF) étant conçu pour convertir, dans le troisième mode de fonctionnement (IF_{III}), un signal d'entrée numérique (IF_rx), notamment conforme à la norme UART, en un troisième signal de sortie numérique (sD3), notamment conforme à la norme IEC 61158 CPF15:2007 et/ou EIA-485 ; et
- le circuit d'interface et le microcontrôleur étant conçus pour fonctionner simultanément dans le troisième mode de fonctionnement respectif (µC_{III} ; IF_{III}), de telle sorte que le deuxième signal de sortie (sD2) à la sortie de signal (µC_tx) du microcontrôleur forme le signal d'entrée numérique présent à l'entrée de signal (IF_rx) du circuit d'interface, et de telle sorte que le circuit d'interface reçoive et traite ledit deuxième signal de sortie (sD2), notamment en le convertissant en troisième signal de sortie (sD3).

5. Électronique selon la revendication 4,
- pour laquelle le circuit d'interface comporte une deuxième borne de raccordement (IF_ext2) et lequel circuit est conçu pour délivrer, dans le troisième mode de fonctionnement, le troisième signal de sortie (sD3) à ladite deuxième borne de raccordement, pour ne pas convertir - notamment à la fois dans le premier mode de fonctionnement et dans le deuxième mode de fonctionnement - un signal d'entrée présent à l'entrée de signal en un signal de sortie représentant ledit signal d'entrée, ou pour ne pas délivrer de signal de sortie représentant un signal d'entrée présent à l'entrée de signal sur la deuxième borne de raccordement ; et/ou
- le circuit d'interface étant conçu pour émettre le troisième signal de sortie sur la première borne de raccordement dans le troisième mode de fonctionnement ; et/ou
- le microcontrôleur étant conçu pour passer du deuxième au troisième mode de fonctionnement sous le contrôle du signal d'entrée (sD1) présent à l'entrée de signal (µC_rx) ; et/ou
- le microcontrôleur étant conçu pour passer automatiquement du troisième mode de fonctionnement au premier mode de fonctionnement après la sortie du signal de sortie numérique (sD2) au niveau de la sortie de signal (µC_tx) ; et/ou
- le circuit d'interface étant conçu pour ne pas convertir - à la fois dans le premier mode de fonctionnement et dans le deuxième mode de fonctionnement - un signal d'entrée présent à l'entrée de signal (IF_rx) en un signal de sortie représentant ledit signal d'entrée ou pour ne pas délivrer de signal de sortie représentant un signal d'entrée présent à l'entrée de signal sur la première borne de raccordement (IF_ext1) ; et/ou
- le microcontrôleur étant conçu pour ne pas traiter, dans le troisième mode de fonctionnement, un signal d'entrée numérique présent à l'entrée de signal (µC_rx), notamment pour ne pas exécuter d'instruction parvenant à l'entrée de signal (µC_rx) ; et/ou
- le circuit d'interface comportant un émetteur-récepteur (RS485), notamment compatible avec les normes IEC 61158 CPF15:2007 et/ou EIA-485 et/ou monolithique, notamment du type SN65HVD1781 de Texas Instruments Inc. 2019 ou du type THVD2450 de Texas Instruments Inc. 2019, et la première borne de raccordement du circuit d'interface étant formée au moins au moyen des connexions du circuit d'attaque de BUS / du récepteur de l'émetteur-récepteur (A, B), la sortie de signal (IF_tx) du circuit d'interface au moyen d'une sortie numérique (R) de l'émetteur-récepteur et l'entrée de signal (IF_rx) du circuit d'interface au moyen d'une entrée numérique (D) de l'émetteur-récepteur.

6. Électronique selon l'une des revendications 4 à 5,
- pour laquelle le microcontrôleur comporte une deuxième sortie de commande (µC_ctl2) et le circuit d'interface comporte une deuxième entrée de commande (IF_sw2) ; et
- pour laquelle la deuxième sortie de commande du microcontrôleur est reliée électriquement à la deuxième entrée de commande du circuit d'interface.

7. Électronique selon la revendication précédente, pour laquelle le microcontrôleur est conçu pour émettre, dans le troisième mode de fonctionnement, une instruction à la deuxième sortie de commande qui amène le circuit d'interface à fonctionner dans son troisième mode de fonctionnement.

8. Électronique selon l'une des revendications 1 à 3, pour laquelle le circuit d'interface est conçu pour obtenir la puissance électrique nécessaire aussi bien dans le premier mode de fonctionnement que dans le deuxième mode de fonctionnement exclusivement à partir du signal d'entrée (e1) présent à la première borne de raccordement.

9. Électronique selon l'une des revendications précédentes, comprenant en outre :
- un circuit d'alimentation (NRG) formé notamment au moyen d'un accumulateur d'énergie électrochimique et/ou rechargeable,
- le circuit d'alimentation (NRG) comportant au moins une première borne d'alimentation (U1) et étant conçu pour fournir une tension de fonctionnement pour le microcontrôleur à la première borne d'alimentation ;
- et le microcontrôleur comportant une borne d'alimentation qui est reliée électriquement à la première borne d'alimentation (U1) du circuit d'alimentation (NRG).

10. Électronique selon la revendication précédente,
- pour laquelle le circuit d'alimentation (NRG) comporte une deuxième borne d'alimentation (U2) et est conçu pour fournir une tension de fonctionnement au circuit d'interface au niveau de la deuxième borne d'alimentation ;
- et pour laquelle le circuit d'interface comprend une borne d'alimentation, laquelle est connectée électriquement à la deuxième borne d'alimentation du circuit d'alimentation (NRG).

11. Électronique selon la revendication 9 ou 10, pour laquelle le circuit d'interface comporte un interrupteur principal électronique (HS) formé notamment au moyen d'un relais à semi-conducteur ou d'un transistor à effet de champ à couche isolante, aussi bien la première entrée de commande (IF_sw1) du circuit d'interface que la borne d'alimentation (V_{CC}, GND) du circuit d'interface (IF) étant formées au moyen de l'interrupteur principal (HS).

12. Électronique selon l'une des revendications précédentes,
- pour laquelle le circuit d'interface comprend un convertisseur de tension continue (CC/CC), notamment séparé galvaniquement, avec une entrée de convertisseur et une sortie de convertisseur, notamment un convertisseur flyback ou un convertisseur push-pull, le convertisseur de tension continue étant conçu pour convertir une tension continue d'entrée présente à l'entrée du convertisseur en une tension continue de sortie présente à la sortie du convertisseur avec un niveau de tension différent du niveau de tension de la tension continue d'entrée ; et/ou
- le circuit d'interface comportant un filtre de signal, notamment passif, notamment un filtre passe-haut ; et/ou
- le circuit d'interface comportant, pour différencier le signal d'entrée présent sur la première borne de raccordement (IF_ext1), un filtre passe-haut, notamment passif et/ou présentant une fréquence limite supérieure à 800 Hz ;
- le circuit d'interface étant conçu pour prélever la puissance électrique nécessaire au fonctionnement (énergie auxiliaire) au moins temporairement et/ou au moins partiellement à partir du signal d'entrée (e1) présent au niveau de la première borne de raccordement, notamment pour prélever la puissance électrique nécessaire au premier mode de fonctionnement exclusivement à partir du signal d'entrée (e1) présent au niveau de la première borne de raccordement ; et/ou
- le circuit d'interface présentant, dans le premier mode de fonctionnement, une puissance requise inférieure à 50 mW ; et/ou
- le circuit d'interface présentant, dans le deuxième mode de fonctionnement, une puissance requise supérieure à la puissance requise par le circuit d'interface dans le premier mode de fonctionnement, notamment supérieure à 300 % de la puissance requise par le circuit d'interface dans le premier mode de fonctionnement et/ou supérieure à 150 mW.

13. Électronique selon l'une des revendications précédentes, pour laquelle le circuit d'interface comprend un premier optocoupleur (OK1) avec un élément émetteur optique et un élément récepteur optique, la sortie de commande du circuit d'interface étant formée au moyen du premier optocoupleur, de telle sorte que son élément récepteur optique est relié électriquement à l'entrée de commande du microcontrôleur.

14. Électronique selon la revendication précédente, pour laquelle le circuit d'interface comprend un deuxième optocoupleur (OK2) avec un élément émetteur optique et un élément récepteur optique, la sortie de signal du circuit d'interface étant formée au moyen du deuxième optocoupleur, de telle sorte que son élément récepteur optique est relié électriquement à l'entrée de signal du microcontrôleur.

15. Électronique selon la revendication précédente, pour laquelle le circuit d'interface comprend un troisième optocoupleur (OK3) avec un élément émetteur optique et un élément récepteur optique, notamment de telle sorte que la première entrée de commande du circuit d'interface est formée au moyen du troisième optocoupleur, de telle sorte que son élément récepteur optique est relié électriquement à la première sortie de commande du microcontrôleur.

16. Électronique selon la revendication précédente et l'une des revendications 6 à 7, pour laquelle la deuxième entrée de commande du circuit d'interface est formée au moyen du troisième optocoupleur, de telle sorte que son élément émetteur optique est relié électriquement à la deuxième sortie de commande du microcontrôleur.

17. Électronique selon la revendication précédente, pour laquelle le circuit d'interface comprend un quatrième optocoupleur (OK4) avec un élément émetteur optique et un élément récepteur optique, l'entrée de signal du circuit d'interface étant formée au moyen du quatrième optocoupleur, de telle sorte que son élément émetteur optique est relié électriquement à la sortie de signal du microcontrôleur.

18. Système de communication, comprenant :
- une électronique selon l'une des revendications 1 à 17 ;
- ainsi qu'un générateur de signaux (NLU) relié électriquement à l'électronique ;
- le générateur de signaux (NLU) étant conçu pour envoyer à l'électronique un signal numérique, notamment conforme à la norme IEC 61158 CPF15:2007.

19. Système de mesure, comprenant :
- une électronique selon l'une des revendications 1 à 17 ;
- ainsi qu'un capteur couplé électriquement à l'électronique, le microcontrôleur étant configuré pour recevoir et évaluer, au moins dans le premier mode de fonctionnement, un signal de capteur généré par le capteur, notamment pour déterminer des valeurs mesurées pour au moins une grandeur de mesure saisie par le capteur.
